(19) Europäisches Patentamt

European Patent Office

Office européen des brevets

(11) **EP 3 495 811 A1**

(12) **EUROPEAN PATENT APPLICATION**

(43) Date of publication:
**12.06.2019 Bulletin 2019/24**

(51) Int Cl.:
***G01N 29/02*** *(2006.01)*      ***G01N 29/22*** *(2006.01)*

(21) Application number: **18211676.4**

(22) Date of filing: **11.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2017   US 201762597202 P**
**12.02.2018   NL 2020419**
**04.10.2018   US 201816152029**

(71) Applicant: **Sensor-Kinesis Corporation**
**Los Angeles, CA 90045 (US)**

(72) Inventors:
• **SHACHAR, Yehoshua**
**Santa Monica, CA 90405 (US)**
• **GURLEY, Sam**
**South Pasadena, CA 91030 (US)**
• **CIPRIANO, Aaron**
**Fullerton, CA 92835 (US)**
• **YIN, Peter**
**Culver City, CA 90230 (US)**
• **PURNELL, Rob**
**Los Angeles, CA 90034 (US)**
• **ROCKLINGER, Marc**
**Marina del Rey, CA 90292 (US)**
• **PETRULLO, Ming**
**Redondo Beach, CA 90278 (US)**
• **STELEA, Stelica**
**Yorba Linda, CA 92886 (US)**
• **KORNBERG, Roger**
**Atherton, CA 94207 (US)**

(74) Representative: **Duxbury, Stephen et al**
**Arnold & Siedsma**
**Bavariaring 17**
**80336 München (DE)**

(54) **FIELD PORTABLE HANDHELD, RECIRCULATING SURFACE ACOUSTIC WAVE AND METHOD FOR OPERATING THE SAME**

(57)    A system and method for performing a portable, fast, field assay of a small sample biological analyte includes a microfluidic cartridge and a reader with which the microfluidic cartridge is selectively communicated. A closed microfluidic circuit for mixes and recirculates the analyte with a buffer. A shear horizontal surface acoustic wave (SAW) detector communicates with the microfluidic circuit and has a plurality of channels including at least one functionalized sensing lane in which the mixed analyte and buffer is recirculated and sensed and including at least one reference lane. Capture of the analyte is amplified by recirculation of the analyte and buffer, and detection is amplified by use of an all-purpose endospore display mass amplification.

*FIG. 1*

**Description**

The invention relates to the field of biosensing employing a microfluidic circuit for supplying analyte to a surface acoustic wave sensor (SAW) and where the principle of operation is based on rapid association of a biological species onto a functionalized sensor. More particularly, the invention is directed to convection enhanced delivery (CED) as a means to reduce the diffusive timescales, thereby improving the probability of the analyte encounter with the antibodies present on the sensor lane. The use of microfluidic enables multiple biological sequencing events whereby analyte conjugation, bioamplification, and detergent administration reduces false positives of the measured result. Further, use of the biochemical amplification reduces the limit of detection (LOD) to a measurable value between femtogram(s) (fg) to pictogram(s) (pg) per milliliter (ml) of volume.

The aim of setting humanity on the path to autonomous healthcare for the individual is clearly constrained by existing socioeconomical and geographical parameters. The ability of an individual, as well as entire communities, to be measured by their access to active diagnostic screenings of potential maladies as an asymptomatic expression is the hallmark of this technology. The technology is defined by the measure of the immediacy of its success in a healthcare system. This quantitative measure of "Health" is defined by the access these communities have to such diagnostic medical practices.

As disclosed below access to easy, portable and on demand medical diagnostics is possible, but from development to distribution, many of technological undertakings look only to communities of affluent individuals in the developed markets as their target market, while poor and under-developed markets are deprived of all but the most basic or are limited to a trickle down of medical necessities. The development of a portable, automated screening apparatus with accessibility spanning broad swaths of socioeconomic levels and geographies is an object of the invention and is described under the heading of "Democratization of Diagnostic Medicine".

The path for the technology to enable an individual to test his or her medical conditions has previously been contingent on the ability to reduce the complexity of biochemical or biological tests by screenings of bodily fluids through the use of the services of an institutional laboratory. This illustrated embodiments of the invention described below center on transferring such processes to a field, automated portable, disposable apparatus operated by an unskilled user.

The challenge is not solely an issue of elimination of the use of large or complex lab equipment and highly trained lab personnel, but requires surmounting a myriad of physical, biochemical and other inherent constraints outlined below to which illustrated embodiments of the invention are intended to provide a solution.

The automation of biochemical sequencing to detect the presence of a virus, protein, exosome DNA or RNA within a complex assay of blood, saliva, urine or any other bodily fluids does not merely involve the geometrical and metric miniaturization of preexisting equipment, but involves overcoming limitations of many laws of physics, such as the limitations imposed: (1) by the diffusion coefficient of an analyte (determined by viscosity, particle size, and temperature); (2) by flow characteristics of the bodily fluid sample (the modeling of rate of flow relative to conjugation rate); (3) by the inherent association and dissociation of a particular analyte to its antibody (Kd); and (4) by ultimately providing for a system and method, which addresses the clinical resolution of the measuring apparatus, where through its principles of its operation, it can discern between false positive and false negatives results employing artificial intelligence algorithm to form a decision from the data generated by the system .

The prior art for the subject matter generally defined under the heading of "how to reduce the limit of detection for identifying a pathogen, be it a protein, DNA, RNA, or viruses is the ability of the apparatus and its biochemical probe to respond to a minimal Limit of detection based on concentration with values ranging from femtogram to picogram of an analyte with a volume of milliliter of liquid. The minimal LOD at such concentration can be operationally defined by the two fundamental concepts of "Capture and Detection" and in turn it relates to the measure of the apparatus in question to address the Resolution of the measuring system to address such low concentration of the LOD by providing a clear metrics defining the relationship between the minimum mass conjugated on the surface of the sensor versus the equivalent electrical change registered by the measuring device. The challenge of LOD vs. Resolution of the measured output is the central issue this application and its novelty are concern with.

The unique challenges posed by a minimal LOD and the solution provided by this application, is further complicated using a sensing modality associated with the use of Sheer Horizontal Surface Acoustic Wave biosensor approach which fundamentally relay on the ability of the sensor and its electronic reader to resolve mass accumulation over the sensing lane(s) on the order of femtogram to picogram per $ml^{-1}$.

As shall be demonstrated by this application a series of inventive steps were employed in addressing this challenge to address and operationalize the contributing factors which relate to Capture and Detection and the apparatus the follow such solution.

There is a continuing need to be able to analyze very small samples of DNA-based analytes in the field within short time periods by untrained personnel using low cost handheld devices. However, no such devices currently exist.

Analysis of DNA-based analytes collected in patients or in the field has been typically performed by utilizing biochemical amplification of the analyte, such as by the polymerase chain reaction (PCR), to increase the amount of analyte until it reaches a magnitude at which clinical or laboratory DNA analysis can reliably be made. The vast majority of PCR methods rely on thermal cycling, which involves exposing the reactants to cycles of repeated heating and cooling, permitting different temperature-dependent reactions, specifically, DNA melting and enzyme-driven DNA replication, to quickly repeat many times in sequence. Primers (short DNA fragments) containing sequences complementary to the target region, along with a DNA polymerase, after which the method is named, enable selective and repeated amplification. As PCR progresses, the DNA generated is itself used as a template for replication, setting in motion a chain reaction in which the original DNA template is exponentially amplified. PCR is thus a carefully controlled and time-consuming laboratory-intensive methodology, which cannot realistically be practiced in a short period of time in the field with a low-cost handheld device by untrained personnel.

Another prior technology for analyzing small samples of DNA-based analytes is the use of analyzers that rely on diffusion of the analyte in a functionalized sensor, such as an enzyme-linked immunosorbent assay (ELISA). As an analytic biochemistry assay, ELISA involves detection of an analyte in a liquid sample by a method that continues to use liquid reagents during a controlled sequence of biochemical reactions that generate a signal, which can be easily quantified and interpreted as a measure of the amount of analyte in the sample. The sample stays liquid and remains inside a reaction chamber or well needed to keep the reactants contained, as opposed to a "dry lab" test that use dry strips. Even if the sample is liquid (e.g. a measured small drop), the final detection step in dry analysis involves reading of a dried strip by methods such as reflectometry and does not use a reaction containment chamber to prevent spillover or mixing between samples.

As a heterogenous assay, ELISA separates some component of the analytical reaction mixture by adsorbing certain components onto a solid phase which is physically immobilized. In ELISA, a liquid sample is added onto a stationary solid phase with special binding properties and is followed by multiple liquid reagents that are sequentially added, incubated and washed followed by some optical change, e.g. color development by the product of an enzymatic reaction, in the final liquid in the well from which the quantity of the analyte is measured. The qualitative reading is usually based on detection of intensity of transmitted light by spectrophotometry, which involves quantitation of transmission of some specific wavelength of light through the liquid as well as the transparent bottom of the well in the multiple-well plate format. The sensitivity of detection depends on amplification of the signal during the analytic reactions. Since enzyme reactions are very well-known amplification processes, the signal is generated by enzymes which are linked to the detection reagents in fixed proportions to allow accurate quantification.

The analyte is also called the ligand because it will specifically bind or ligate to a detection reagent, thus ELISA falls under the bigger category of ligand binding assays. The ligand-specific binding reagent is immobilized, i.e., usually coated and dried onto the transparent bottom and sometimes also side wall of a well (the stationary "solid phase" / "solid substrate" here as opposed to solid microparticle/beads that can be washed away), which is usually constructed as a multiple-well plate known as the "ELISA plate". Conventionally, like other forms of immunoassays, the specificity of antigen-antibody type reaction is used because it is easy to raise an antibody specifically against an antigen in bulk as a reagent. Alternatively, if the analyte itself is an antibody, its target antigen can be used as the binding reagent. It can readily be appreciated that ELISA cannot realistically be practiced in a short period of time the field with low cost handheld devices by untrained personnel.

There are several technical constraints that have prevented the invention and successful development of a low cost, field portable handheld device useable by untrained personnel to reliably analyze small DNA-based samples in short time periods, namely or the order of 15 minutes or less. These constraints include the inherent problem and limitation of using any kind of diffusion process in a sensing apparatus to analyze the μL sample. Depending the sensing mechanism employed, the capture fraction of the analyte by the sensor is typically very low, the sample size of the analyte is typically in the tens of microliters or a few small drops of liquid, and the diffusion times can be long, often stretching to many hours with typical prior art technologies.

With small samples sizes, typically 50 μL or less, the amount of mass of DNA-based analyte is in the range of picograms. For example, at least 74% of the mass of E. Coli is water so that any sensing process applied to E. Coli that depends on the difference in the mass of the DNA-based analyte over the mass of the aqueous solution or buffer in which the analyte is carried and diffuses will need to be able to reliably detect a small fraction of the small sample size.

The sample sizes collected in typical field applications are so small that an amplification process is necessary to reliably measure the presence and amount of the analyte. The analyte must not only be detected, but clearly detected with high repeatability to avoid false positives. Clinical standards require that the detected signal be at least three times larger than the average noise level in the detector, namely a signal-to-noise ratio more than three.

Finally, for the device to be usable in the field, it must be of such a construction and nature that untrained operators can reliably employ the device and method without inviting the introduction of unintended sampling errors or variations. In prior experiences with laboratory functionalized, surface acoustic wave (SAW) detectors, for example, highly variable test results have been obtained due to small variations in the environmental conditions at the time of loading the sample into the SAW detector. The temperature of the laboratory, the operation of a local air conditioning and heating system near the detector, an open nearby window, variations in humidity and other unsuspected environmental conditions at the time of sample loading can change the result the detector records.

These and other constraints are substantial, cannot be avoided, and must be overcome to be able to analyze very small samples of DNA-based analytes in the field within short time periods by untrained personnel using low cost handheld devices.

The detection limit is of great importance in biomolecular assay and sensor development. There has been an increasing pressure to push the detection limit of bioanalytical techniques to lower levels while increasing resolution. This pressure is largely driven by a demand for new molecular diagnostic tests for early stage cancer detection and diagnosis. At early stages of cancer development, the amount of cancer biomarker molecules released from the tumor to the blood or other biological fluids is very small. Naturally, one assumes that a more sensitive analytical technique that can "catch" these cancer biomarkers at lower concentrations the earlier will cancer be detected. Under this general premise, pursuing lower level detection limits has become a major goal of bioanalytical technology development, this effort is the mainstay of this application where the use of biomass with specificity to the analyte in question is being promoted under the general guidelines of employing endospores with genetically modified expression to respond to the analyte thereby increasing its detectable mass proportional to the bound analyte to its antibody in the forms of a customary titled ELISA sandwich.

It is not uncommon to see detection limits in the fg-pg ml$^{-1}$ range for protein antigens, and sometimes even down to the single molecule level. While pursuing bioanalytical techniques and products with higher sensitivities and lower detection limits, it's important to ask a critical question: is the clauseed/expected detection limit theoretically achievable? If by theory, an analytical method cannot possibly achieve the sensitivity as clauseed, attempted use of such methods for expected high sensitivity analysis can only lead to a waste of research effort and resources, and sometimes, misleading results. This issue of limited available biological species defined by its concentration (within the aqueous volume) and the ability of the detector to sense such limited presence of the antigen is determined by the test apparatus resolution. These and other considerations which limit our ability to measure concentration of biological species in the order of fg-pg mL$^{-1}$, and is the focus of this application.

Detecting biochemical species with LOD ranging from femtogram to picogram value is mandated by the need for early detection of biological species (biomarkers present in blood, saliva, urine or other bodily fluids), where such species are invariably marked by their low concentration value. The aim of this entire exercise is to achieve a reliable measurement of a biological capture between an antibody and its antigen.

As shall be described by this application, this effort is set relative to the use of a biosensor with the attributes noted by employing a shear horizontal surface acoustic wave biosensor (SH-SAW) where mass accumulation associated with any biological species and its conjugate analyte increases the mass loading thereby provides an electrical signal proportional to the attenuation of the waveform and relative to its mass accumulated over the sensor lane.

Through prior experimentation, it has been discovered that the limit of detection (LOD) of the SH-SAW sensors is dictated by the frequency band utilized and corresponds roughly to the order of one picogram (the resolution of the measuring device). This arises from the frequency used (325 MHz) such that resolution is maximized and where elastic energy does not escape the lane, thereby increasing the insertion losses (IL) of the apparatus. For a measurement to be deemed statistically significant by the National Institute of Standards and Technology (NIST), a signal value must be three times larger than the signal to noise ratio (SNR). The LOD therefore arises from this relationship set forth by NIST, and with the use of the operational frequency (325 MHz) the apparatus output measured in phase ($\phi$) of the frequency will obey the formalism noted by the equation for the LOD expressed as

$$LOD = \frac{3 \times N_f}{S_\sigma^\phi \times \phi_0} \Delta \sigma_r = \frac{3 \times N_f}{S_\sigma^\phi \times \phi_0}.$$

Using this formalism, coupled with our experimental frequency of 325 MHz, we obtained the resulting minimum LOD of approximately one picogram of mass coupled with bioamplification using the microfluidic device described below as illustrated in the Figures.

In this application, we describe a procedure whereby the use of a bioamplification method of specifically conjugating a single endospore to the analyte in question contributes an additional 1 pg of mass to the analyte in a form resembling an ELISA sandwich, thereby providing a means by which such mass loading can theoretically achieve the detection limits in the disclosed apparatus as further clarified by the Figures and their associated descriptions.

With the assumption that the analyte concentration is set at level of femtogram to picogram in a milliliter volume (fg-pg ml$^{-1}$), and further due to the apparatus limitation, set with resolution of 1 picogram, a need to create a mass amplification step is apparent to ensure detection of target antigens at concentrations that are within the necessary limits deemed significant.

An additional limitation of performing a bioconjugation of analyte to its antibody is the fact that the limit of detection mandates a bioamplification step. This requirement of enhancing the analyte mass to overcome the apparatus resolution (1 pg threshold mass of detection) is further complicated by the fact that the amplification steps employing endospores, polymer structures with suitable mass and/or magnetic beads, necessitate the removal of nonspecific elements, which were sedimented debris and gravitationally bound masses, which must be removed to avoid false positive readings. To that extent, the application employs a technique of convection enhanced delivery in a microfluidic chamber.

As shall be demonstrated by the illustrated embodiments, the use of a microfluidic chamber with an active convection enhanced delivery (CED) enables sequencing within the chemical reaction necessary in establishing the LOD at the levels noted above.

Endospores are genetically modified bacteriophage that have been engineered to express specific single-chain variable fragments (scFv), which are antibody-like proteins on the surface at the tips of the phage. These endospores are designed to have a high affinity for binding to a particular analyte, while possessing an expressed mass of one picogram, a detectable unit of mass for the SAW sensor. Additionally, endospores possess a vectoral affinity and rigidity that works to support the strategy of mass amplification in surface acoustic wave sensing modality. By employing endospores as a bioamplifier, a three-piece sandwich ELISA is created, consisting of 1) an antibody capture site welded to the sensor, 2) a target antigen captured from the fluid sample, and 3) an endospore that is introduced after initial antibody-antigen association has occurred. Because a single endospore has a mass thousands of times greater than the target antigen, this ELISA sandwich binding process allows us to detect target materials that would otherwise be undeletable because of the LOD of the device. Before final measurements of the solid-state phase shift are recorded, a detergent is added to remove any sedimented endospores not electrochemically bound to the sensor to prevent any mass contributions that would return a false positive.

This process of attaching the endospore to the analyte can be done in two ways. A premixing of analyte and endospore can occur where both are introduced in a mixing chamber before being sent to the SAW sensor for capture. This would lead to a markedly diminished signal resulting from the fact that many analytes would be absorbed onto a single spore, in addition to the low rotational and translational diffusion rates of a spore, leading to an order of magnitude lower rate of analyte binding to the chip. Another problem with this method is that a deviation from the linear relationship between the capture-to-concentration rate is apparent, as the change in mass would no longer correspond to a 1:1 ratio of analyte concentration, as free-floating analytes can be captured by the endospores before they can interact with the chip.

The second option is to have two additional chambers, one for spores to be introduced following analyte recirculation over the chip, and a second to introduce a detergent to wash away unbound spores. To further enhance the signal-to-noise ratio and establish a quantitative measurement, the cartridges disclosed below utilize the multi-reservoir system of sequentially delivering biological mass amplifiers and detergent separately from the initial analyte sample, reducing nonspecific binding of endospores which would either generate nonlinear ratios of analyte to endospore, thus making measurements qualitative, or generate false positive measurements.

The addition of mass loading to the SAW sensor during shear wave propagation enables a detectable phase shift in the acoustic waveform to be observed, because of the attenuation of the surface shear waves in response to the additional mass. This correlates directly to the ratio of analyte surface coverage of the SAW sensor at equilibrium to total available surface sites, as will be explained below. This final solid-state phase shift is registered electronically by the reader mechanism, which uses a microprocessor to analyze the data and to store or transmit the results to the user, be it a physician or institution.

Given an antibody-antigen reaction that follows an adsorption pattern according to the Langmuir Isotherm, the surface adsorption process is expressed as:

$$[Antibody] + [Analyte] \Longleftrightarrow [Antibody - Analyte\ complex]\ , \text{or}$$

$$[Ab] + [S] \Longleftrightarrow [AbS]$$

With forward reaction constant $k_{on}$ and reverse reaction constant $k_{off}$. The adsorption can be described using the differential equation:

$$\frac{d\Gamma}{dx} = D\left(\frac{\partial C}{\partial x}\right);$$

$$\text{where } D \equiv Diffusion\ Constant\ \left(\frac{cm^2}{s}\right),\ \text{where } \Gamma \equiv Surface\ coverage\ \left(\frac{molecules}{cm^2}\right),$$

The Equilibrium constant:

$$K \equiv \frac{k_{on}}{k_{off}} = \frac{\Gamma}{(\Gamma_{max}-\Gamma)C_b}\ ;\ \ \Gamma_{equilibrium} = \Gamma_{max}KC_b,$$

where $\Gamma_{max}$ is the total number of available antibody binding sites on the surface of the detector.

The kinetics can be related to the rate of diffusion in the solution by

$$J_D = Rate\ of\ diffusion = \frac{D(C_b-C_s)}{L},$$

where L is the diffusion length and the simple Langmuir first-order rate of adsorption (for low coverage) at the surface,

$$J_R:\ J_R = k_{ads}C_S(\Gamma_{max} - \Gamma).$$

When using the SAW biosensor, the endpoint is typically used, i.e. when the system reaches an apparent steady-state (the delta phase value levels off). At steady-state (S.S.)

$$J_D = J_R\ \therefore\ \frac{D(C_b-C_s)}{L} = k_{ads}C_S(\Gamma_{max} - \Gamma).$$

Solving for the surface concentration at S.S.

$$C_S = \frac{C_b}{1+\frac{k_{ads}L(\Gamma_{max}-\Gamma)}{D}}\ ,\ \text{or } C_S = \frac{C_b}{1+\theta},$$

where $\theta$ is known as the Thiele modulus, a dimensionless parameter. For cases where the value of $\theta \gg 1$, $C_s$ approaches 0, and any antigen contacting the surface will be absorbed onto it. In this case, the rate of surface coverage is determined by the rate of diffusion in solution or

$$J_D = \frac{D(C_b-C_S)}{L}.$$

For cases where $\theta \ll 1$; $C_s$ approaches $C_b$. Therefore, the diffusion in the solution is faster than the adsorption and the kinetics of the process is governed by the rate of adsorption at the surface.

In this case:

$$J_R = k_{ads}L(\Gamma_{max} - \Gamma)$$

when not in a limiting case, the equation for Cs is solved. Based on literature values, the value of $\theta$ is calculated to be $2\times10^{-9}$; $\theta \ll 1$. Assuming a diffusion constant given by the Stokes-Einstein equation gives

$$D = \frac{k_bT}{6\pi\eta r} \cong 5\times10^{-7}.$$

The packing density of the antibodies nanoparticles in the immunoassay assay is estimated at $10^{10}\frac{molecules}{cm^2}$. Therefore, the rate of change of the surface coverage can be given by an adsorbing species is given by the simplified equation:

$$\frac{d\Gamma}{dt} = k_{ads}C_b(\Gamma_{max} - \Gamma).$$

Since all experiments are performed at approximately the same temperature (temperature controlled setup), assume that $k_{ads}$ remains constant. Integrating with initial conditions $\Gamma(0) = 0$; $\Gamma(t) = \Gamma$, the solution becomes:

$$\Gamma = \Gamma_{max}(1 - e^{k_{ads}c_b t}), \text{ or } \frac{\Gamma}{\Gamma_{max}} = 1 - e^{k_{ads}c_b t}.$$

The time constant which determines the relaxation time for each run, $\tau$, is given as

$$\tau = \frac{1}{k_{ads}c_b}.$$

The $\frac{\Gamma}{\Gamma_{max}}$ is directly proportional to the corrected, normalized phase change. Therefore, the correlated values

$$\frac{\Gamma}{\Gamma_{max}} = \frac{delta\ phase\ (sample)}{delta\ phase\ standard\ (glycerol)} = 1 - e^{(-\frac{t}{\tau})}.$$

The signal is assumed to reach saturation at the end of $3\tau$, which corresponds to 95% of the delta phase value. This is estimated to be less than 10 minutes. The delta phase values depend on both the concentration of the antigen and the incubation time. The transient is assumed to typically last less than 10 min but is dependent and the antigen antibody combination.

There are two fundamental problems associated when measuring small concentrations of antigen of biological species, where conjugation rate (K+) between antibody and its counterpart (such as: DNA or DNA fragment, RNA, protein, bacteria, or virus) are determined by an association constant antibody. The factors which the application of convection enhanced diffusion solve is the ability of the apparatus to reduce the effect of the diffusion coefficient limitation as well as the association rate of a small sample of antigen to provide a measurable and consistent value of the biological assay in question. By incorporating convection and diffusion techniques to homogenize antigen concentration throughout the microfluidic apparatus, spontaneous electrochemical capture of proximal antigens to the antigen surface occurs more frequently than by diffusion alone, reducing timescales for the apparatus to saturate from 6 hours in absence of CED to approximately 10 minutes with CED.

For mass transport of a dissolved species (analyte), concentration gradients will drive the transport mechanism diffusion. Specially fabricated scFv antibody capture sites are designed to have high association rates, so any analyte that passes within one micrometer of the SAW antibody capture plate is assumed to covalently attach to the chip. Where there is fluid motion, sites of active and passive mixing can be used to reset the vertical concentration gradient and homogenize the species normal to the chip within the channel. Because of the closed-circuit nature of the microfluidic apparatus, mixing sites implemented in parallel before the SAW sensor will act by convection to maintain a species concentration in the capture range of one micrometer above the channel and deposit this mixed solution onto the antibody capture sites. Mixing will also remove any negative concentration gradient in the horizontal downward direction that has accumulated in the fluid to maximize the chance of antibodies being present in the capture radius without the need to wait for diffusion timescales to homogenize the fluid and saturate the associative layers. The expression for the combined convection diffusion equation is:

$$\frac{\partial c}{\partial t} = \underbrace{\nabla \cdot (D\nabla c)}_{1} - \underbrace{\nabla \cdot (\vec{v}c)}_{2} + \underbrace{R}_{3},$$

where the first term describes diffusion, the second term describes convection, and the third term describes removal of the species onto the sensor via association. This relationship is utilized in a technique known as convection enhanced delivery, or CED. During CED, convection and diffusion occur simultaneously to increase the probability of capture between an antibody layer and a suspended antigen solution. CED works to deposit material into the electrochemical binding range through convection at a sufficiently high rate such that the convection term acts as a dominant factor, while reducing the effect of the diffusion coefficient limitation in the relationship. Because of the constant homogenization of analytes through convective fluid motion, the contribution of diffusion in replacing the captured analytes becomes almost negligible over the timescale in which a concentration gradient can be established due to association onto the sensor and before the fluid passes over the entirety of the SAW association site before being returned to the recirculating microfluidic network.

To fully integrate convection enhanced delivery into the mass transport of analytes, the fluid motion and its behavior will have to be derived for this application. The Navier-Stokes Equations are a set of conservation equations that dictate the behavior of fluid motion. By simultaneously solving both for conservation of momentum and mass, the behavior of the fluid flow can be obtained. For a Newtonian fluid, the momentum conservation is expressed as

$$\underbrace{\rho\left(\frac{\partial \mathbf{u}}{\partial t} + \mathbf{u} \cdot \nabla \mathbf{u}\right)}_{1} = \underbrace{-\nabla p}_{2} + \underbrace{\nabla \cdot \left(\mu(\nabla \mathbf{u} + (\nabla \mathbf{u})^T) - \frac{2}{3}\mu(\nabla \cdot \mathbf{u})\mathbf{I}\right)}_{3} + \underbrace{\mathbf{F}}_{4},$$

while the conservation of mass is expressed as

$$\frac{\partial \rho}{\partial t} + \nabla \cdot (\rho \mathbf{u}) = 0 .$$

For the momentum equation, the terms represent (1) inertial forces, (2) pressure forces, (3) viscous forces, and (4) external forces. For application in microfluidic flow modeling, a second principle must be introduced to reduce the equation so that it can numerically be computed and utilized in the design stage of development.

The Reynolds number is a dimensionless number that expresses the ratio of 1) inertial forces to 3) viscous forces. It can be calculated from the equation $Re = \frac{\rho \mathbf{u} L}{\mu}$, where $\rho$ is the fluid density $\left(\frac{kg}{m^3}\right)$ is the fluid velocity $\left(\frac{m}{s}\right)$, L is the characteristic linear dimension of the application, (m), and $\mu$ is the dynamic viscosity$(Pa \cdot s)$. For Re < 1, viscous forces dominate, and the flow is laminar. For this application, the computed Re is Re < 1. Therefore, for the Navier-Stoke fluid transport equation for this application, the inertial term (1) and external forces (4) are neglected. Additionally, the incompressible nature of the fluid at application velocities means that the velocity gradient term is also neglected. The combined Navier-Stoke equation for laminar regime therefore reduces to

$$0 = \underbrace{-\nabla p}_{2} + \underbrace{\nabla \cdot \left(\mu(\nabla \mathbf{u} + (\nabla \mathbf{u})^T)\right)}_{3}$$

and

$$\frac{\partial \rho}{\partial t} + \nabla \cdot (\rho \mathbf{u}) = 0.$$

This system of equations, coupled with the boundary conditions arising from the geometry of the apparatus, is used to numerically solve for both a pressure and velocity field within the microfluidic circuit. Because the flow is laminar, there is no inertial mixing occurring normal to the velocity gradient, and any circulation of material would eventually result in a uniform concentration gradient thorough the circulation path and would result in the elimination of any decrease in saturation time resulting from convection and a return to diffusive timescales for saturation. This problem is addressed by the introduction of both an active piezo mixing apparatus and passive mixing channel component in the microfluidic schematic to homogenize the sample fluid with every pass before it is administered onto the surface acoustic wave (SAW) sensor. Additionally, within the timescale of our application, the fluid circulates approximately 50 times thorough the circuit. As a result, during any of the 50 loops, any analytes that pass within 1 $\mu$m of the chip are associated onto the surface. This perpetual looping combined with mixing results in an increase in the statistical odds of the analyte samples being encountered by the antibodies. Because of this, the diffusion coefficient term (1) of the convection diffusion equation at the removal site R can be neglected, as the scales in which convection are able to deliver analytes are much faster than diffusion, so that diffusion becomes negligible.

There exists a tool to be utilized in quantifying the effects of mass transport through convection and diffusion. The Péclet number (Pe), is a dimensionless number which expresses the ratio of contributions of mass transport via convection and diffusion:

$$\mathrm{Pe} = \frac{N_{\mathrm{conv}}}{N_{\mathrm{diff}}} = \frac{c_i|\mathbf{u}|}{D\nabla c_i} = \frac{LU}{D}.$$

Similar to how the Reynolds number describes contributions to momentum transport, the Péclet number expresses contributions to mass transport across a characteristic length scale L. The Péclet number is solved for our geometry with Re < 1 and is also found to be < 1. Because the Péclet number is less than one, the mass will primarily be transported via diffusion from the fluid onto the chip at the length scale of analyte-antibody interaction. This is incorporated into the greater CED flow model by a virtual increase in the diffusion coefficient (or an increase in the effectiveness of diffusion) through homogenization before the fluid reaches the sensor via a passive mixing site in the microfluidic system. By decreasing the characteristic length scale of diffusion even further in these mixing sites, an increased concentration gradient arises which leads to the occurrence of mixing by diffusion, but at greatly reduced timescales. Although the antigens are deposited via diffusion onto the chip, the convective mixing helps to replenish the lower layers by mechanical homogenization and prevents a concentration gradient from developing that would impede sensor saturation timescales. Because of the electrochemical attraction that exists between an antibody and antigen, there exists a range in the fluid flow for which spontaneous capture is likely to occur. As a result, homogenization allows for quicker sample saturation as with each pass the lower layers are refreshed and need not depend on diffusion timescales to replenish the layers in which capture can occur.

There exists an intrinsic association rate $K \equiv \frac{k_{on}}{k_{off}}$ that dictates the capture rate of analytes to the fragmented antibody layer. This property is intrinsic to the covalent reaction between the analyte and its receptor antibody. Although the electronic affinity for capture between a single antibody and its target analyte cannot be altered through biochemical techniques, it can be virtually increased through several geometric applications. One such application is the increase in the total number of available antibody capture sites. By increasing the capture site density on the sensor, a virtual increase is created in the association rate between antibody and analyte, as spontaneous capture is inherently more likely to spontaneously occur as the number of available binding sites increase. Simultaneously, advances in biochemical laboratory techniques allow for the packing density of scFv antibodies onto the stem.

Another method employed for altering the association rate (k+) is generated by the fluid motion. By increasing the volume motion, we alter the natural constants associated with the binding rate between the analyte and antibody as well as the timescales of diffusion coefficient. Although the K constant and the D constant are inherently unchangeable, with the use of CED to refresh concentrations at the fluid surface boundary and prevents a concentration gradient from developing that would hinder association rate because of decreased availability of analyte sample as a function of time and orientation. By maintaining a homogenized analyte concentration, the probability of an analyte passing within one um of the functionalized sensor is greatly increased which results in an increased amount of binding and much shorter timescales for binding, thereby increasing mass loading that the device is capable of detecting.

It can now be understood that the illustrated embodiments of the invention are directed to a system for performing a portable, fast, field assay of a small sample biological analyte. The system includes a microfluidic cartridge; and a reader with which the microfluidic cartridge is selectively communicated.

The microfluidic cartridge includes a closed microfluidic circuit for mixing and recirculating the analyte with a buffer; and a shear horizontal surface acoustic wave (SAW) detector communicated with the microfluidic circuit and having a plurality of channels including at least one functionalized sensing lane in which the mixed analyte and buffer is recirculated and sensed and including at least one reference lane in which the mixed analyte and buffer is recirculated.

The reader includes a SAW interface circuit, a microcontroller coupled to the SAW interface circuit for controlling the SAW detector through the SAW interface circuit and for data processing an output assay signal from the SAW detector, and a user interface communicated with the microcontroller for providing user input and for providing user output.

The closed microfluidic circuit of the microfluidic cartridge includes a microfluidic chamber where the analyte and buffer are combined, an active mixer coupled to the microfluidic chamber for mixing the analyte and buffer into a homogenous mixture, a one-way check valve coupled to the microfluidic chamber and/or active mixer, a pump coupled to the one-way check valve for providing for a positive pressure of the mixture in the closed microfluidic circuit, a bubble trap coupled to the microfluidic chamber and/or active mixer for removing air bubbles from the mixture, a passive mixer coupled to the bubble trap for providing for a uniform flow of the mixture, a distributing manifold coupled to the passive mixer for uniformly distributing the mixture into the plurality of channels in the SAW detector, a receiving manifold for collecting the mixture after flow through the SAW detector, and a return line for recirculating the mixture to the microfluidic chamber.

In the illustrated embodiment the microfluidic chamber includes a perforating membrane through which the analyte is injected.

In one embodiment the plurality of channels in the SAW detector include one functionalized sensing lane and three reference lanes.

The bubble trap includes a spiral bubble trap with a hydrophilic membrane.

The pump and active mixer are a piezo-pump and piezo-mixer.

The closed microfluidic circuit for mixing and recirculating the analyte with a buffer recirculates the mixed analyte and buffer through the closed microfluidic circuit a multiplicity of times within a predetermined time period less than one hour in duration.

More specifically, closed microfluidic circuit for mixing and recirculating the analyte with a buffer recirculates the mixed analyte and buffer through the closed microfluidic circuit approximately 60 times within an approximately 5-minute duration.

The analyte and buffer are combined in the microfluidic chamber using a sample size of the order of 50 $\mu$L in an amount of buffer of the order of 100 $\mu$L.

The reader further includes a power module coupled to the microcontroller and SAW interface circuit for providing electrical power.

The reader further comprises peripherals coupled to the microcontroller including a memory, a temperature and humidity module, a real-time clock, a cooling fan, and an in-circuit serial programming ICSP module.

The user interface comprises a Wi-Fi module and antenna coupled to the Wi-Fi module, a capacitive touch screen, a color thin-film transistor display and a graphic controller with memory coupled to the thin-film transistor display with a backlight source.

The user interface includes an audio module with a speaker coupled thereto, a serial data card interface, an inertial motion unit, at least one RGB LED, and at least one program switch.

The SAW interface circuit comprises a clock oscillator, an RF synthesizer coupled to the clock oscillator, a low pass filter and splitter having an input coupled to the RF synthesizer and an output coupled to the SAW detector, a phase/gain detector coupled to the low pass filter and splitter and having a data input coupled to the SAW detector, an analog-to-digital converter having an input coupled to an output of the phase/gain detector and having an output coupled to the microcontroller, a pump driver, and a motor with a motor driver for mechanically loading the microfluidic cartridge.

The illustrated embodiments also are directed to a microfluidic cartridge for use with a system for performing a portable, fast, field assay of a small sample biological analyte apart from the system. The microfluidic cartridge includes a closed microfluidic circuit for mixing and recirculating the analyte with a buffer; and a shear horizontal surface acoustic wave (SAW) detector communicated with the microfluidic circuit and having a plurality of channels including at least one functionalized sensing lane in which the mixed analyte and buffer is recirculated and sensed and including at least one reference lane in which the mixed analyte and buffer is recirculated.

The microfluidic cartridge is characterized by a closed microfluidic circuit which includes a microfluidic chamber where the analyte and buffer are combined, an active mixer coupled to the microfluidic chamber for mixing the analyte and buffer into a homogenous mixture, a one-way check valve coupled to the microfluidic chamber and/or active mixer, a pump coupled to the one-way check valve for providing for a positive pressure of the mixture in the closed microfluidic circuit, a bubble trap coupled to the microfluidic chamber and/or active mixer for removing air bubbles from the mixture, a passive mixer coupled to the bubble trap for providing for a uniform flow of the mixture, a distributing manifold coupled to the passive mixer for uniformly distributing the mixture into the plurality of channels in the SAW detector, a receiving manifold for collecting the mixture after flow through the SAW detector, and a return line for recirculating the mixture to the microfluidic chamber.

The disclosure can be better visualized by turning now to the following drawings wherein like elements are referenced by like numerals.

The present invention provides for a fully engineered handheld, biosensor, preferably employing a microfluidic circuit for supplying analyte to a surface acoustic wave sensor (SAW), where the principle of operation is based on rapid association of a biolomolecular or biological species (virus, bacteria, biomarker) onto a sensor, which is preferably functionalized. Convection enhanced delivery (CED) is used to reduce the diffusive timescales of the tagged analyte in the sample, thereby improving the probability of the analyte encounter with the antibodies present on the sensor lane. The use of the microfluidic circuit enables multiple biological sequencing events to be performed wherein analyte conjugation, bioamplification, and detergent administration are preferably also used to reduce false positives of the measured result. The use of the biochemical amplification reduces the limit of detection (LOD) to a measurable value between femtogram(s) (fg) to pictogram(s) (pg) per milliliter (ml) of volume.

In other words, the invention also provides for a simple, field deployable, handheld medical diagnostic unit that can give a laboratory quality result for a medical test of a specimen with 15 minutes, including even a single molecule, single particle detection. The test results are wirelessly communicated to a remote medical center for analysis and development of a medical plan.

Thus, for example, one can have an unskilled health worker in the Congo take a sample, e.g. for AIDS or cancer, make the test automatically and have the results automatically communicated to a medical center in Munich, where analysis and treatment protocols are determined for the health worker to follow.

Following on from the above:

The illustrated embodiments of the invention include a system for performing a portable, fast, field assay of a small sample biological analyte having a microfluidic cartridge used with an electronic smart device.

In one embodiment of the invention includes a method of using a system which in turn includes: a closed microfluidic circuit for mixing and homogenizing the analyte with a buffer while using functionalized magnetic beads; a syringe pump for transporting the analyte bearing fluid to the detector; a pump interface circuit coupled to the syringe pump that delivers DC current from a microcontroller to the pump to induce a displacement change and to drive fluid through the various components of the circuit; a filtration screen where large blood cells are trapped, allowing for a fluidic serum of plasma and analyte to flow therethrough; a mixing chamber whereby the magnetic nanoparticles and the analyte are homogenized to allow for conjugation to occur; a shear horizontal surface acoustic wave (SAW) detector communicated with the microfluidic circuit and having a plurality of channels including at least one functionalized sensing lane in which the mixed analyte and buffer flows and is sensed, and having at least one nonfunctionalized reference lane in which the mixed analyte and buffer flows; a SAW interface circuit coupled to the shear horizontal surface acoustic wave (SAW) detector; a retractable permanent magnet located above the SAW that is movable perpendicular to the SAW surface; a microcontroller coupled to the SAW interface, to the syringe pump, to the mixing chamber and to the movable permanent magnet for controlling the SAW detector through the SAW interface circuit, and where the microcontroller is used for data processing an output assay signal from the SAW detector; and a user interface communicated with the microcontroller for providing user input and for providing user output through the smart device.

The closed microfluidic circuit of the microfluidic cartridge includes: a microfluidic chamber where the analyte bearing sample, buffer and functionalized mass amplifying magnetic beads are combined (an immunoassay sandwich is formed out of the functionalized magnetic nanoparticles, target analytes, and immobilized secondary antibody specific for the target analyte); a filtration membrane coupled to the microfluidic circuit for separation of the red and white blood cells from plasma, buffer, analyte and magnetic beads in a serum of blood; an active mixer coupled to the microfluidic chamber for mixing the analyte bearing plasma, buffer and functionalized magnetic beads into a homogenous mixture to enable capture of the analyte by the functionalized magnetic beads to form an immunoassay half sandwich consisting of a functionalized magnetic nanoparticle and a target analyte; a syringe pump for providing for a positive pressure of the mixture in the closed microfluidic circuit to drive the fluid through the separation membrane and transfer the analyte, buffer and functionalized magnetic beads toward the shear horizontal surface acoustic wave (SAW) detector; a sensing chamber whereby the surface of the functionalized SAW is exposed to the flow through fluidic circuit to allow for capture on the analyte magnetic bead conjugates from the fluid onto the sensor generating an immunoassay; a permanent magnet located above the SAW sensor to draw magnetic particles suspended in the sensing chamber onto the surface of the SAW sensor; a traveling arm mechanism that allows for the permanent magnet or electromagnet to exert the magnetic field flux density to drive the magnetic nanoparticles to the surface of sensor (the inverse square law of magnetic force is used so that the variation of the distance of the magnet to its target and/or electromagnetic intensity applies a variable force on the magnetic nanoparticles); and a waste reservoir where fluid expelled from the sensing chamber is stored.

In one embodiment the microfluidic chamber includes a double membrane blood filtration module, whereby two membranes of differing thicknesses allow for the separation of blood to occur while preventing a buildup on the surface resulting in a pressure decrease.

In one embodiment the plurality of channels in the SAW detector include one reference lane and three functionalized sensing lanes, with each lane being functionalized to a different target allowing for the multiplexing of testing targets on a single chip.

In one embodiment the system further includes a bubble trap membrane to degas the fluid before it is passed over the SAW sensor.

In one embodiment, the active mixer comprises of a rotary propeller mechanism in the mixing chamber to allow for rapid homogenization of the analyte and magnetic bead via turbulence induced by the rotation of the fluid.

In an alternative embodiment the active mixer comprises a piezo-pump and piezo-mixer used to agitate the fluid in the mixing chamber to homogenize the sample.

In one embodiment, an electromagnet is attached to the bottom of the sensing chamber to remove any non-specifically bound magnetic beads from the sensor surface before the fluid is transported from the sensing chamber to the waste reservoir.

In one embodiment the closed microfluidic recirculates the mixed analyte and buffer through the closed microfluidic circuit, whereby a microcontroller embedded within the reader commands the permanent or electromagnet to activate a cycling of the magnetic field to enable attraction and relaxation of the magnetic beads circulating within the chamber a multiplicity of times within a predetermined time period less than one hour in duration to allow for increased capture.

In one embodiment the system further includes a power module coupled to the microcontroller and SAW interface circuit for providing electrical power.

In one embodiment the system further includes peripherals coupled to the microcontroller including a memory, a temperature sensor, a humidity sensor, a real time clock, a cooling fan, and an in-circuit serial programming ICSP logic module.

In one embodiment the user interface includes a Wi-Fi module and antenna coupled to the Wi-Fi module, a capacitive touch screen, a color thin-film transistor display and a graphic controller with memory coupled to the thin-film transistor display with a backlight source.

In one embodiment the user interface includes an audio module with a speaker coupled thereto, a serial data card interface, an inertial motion unit, at least one RGB LED, and at least one program switch.

In one embodiment the SAW interface circuit includes a clock oscillator, an RF synthesizer coupled to the clock oscillator, a low pass filter and splitter having an input coupled to the RF synthesizer and an output coupled to the SAW detector, a phase/gain detector coupled to the low pass filter and splitter and having a data input coupled to the SAW detector, an analog-to-digital converter having an input coupled to an output of the phase/gain detector and having an output coupled to the microcontroller, a pump driver, and a motor with a motor driver for mechanically loading the microfluidic cartridge components.

The illustrated embodiment also includes an apparatus in combination with a smart device which is capable of communicating with a network. The apparatus performs a portable, fast, field assay of a small sample biological analyte and includes: a closed microfluidic circuit for mixing the analyte with a buffer with functionalized magnetic beads capable of being specifically combined with the analyte; a detector communicated with the microfluidic circuit in which the mixed analyte, buffer and combined functionalized magnetic beads are sensed; a microcontroller coupled to detector for controlling the detector and for data processing an output assay signal from the detector; and a user interface communicated with the microcontroller for providing user input and for providing user output through the smart device to the network.

In one embodiment the closed microfluidic circuit includes: a microfluidic chamber where the analyte and functionalized magnetic beads are combined; an active mixer coupled to the microfluidic chamber for mixing the analyte, functionalized magnetic beads, and buffer into a homogenous mixture; a membrane filter for separating the whole blood cells from the plasma serum containing the analyte; a syringe pump for providing for a positive pressure of the mixture in the closed microfluidic circuit to transfer the analyte, buffer, plasma and functionalized magnetic beads toward the detector; a movable permanent magnet for drawing the captured magnetic beads onto the detector to allow conjugation of the functionalized captured magnetic beads with the detector to allow a final measurement to be made; and a waste reservoir.

In one embodiment the smart device provides software-controlled user input control and data functions and provides software-controlled user output data functions for the apparatus.

The illustrated embodiments also include a method of operating a medically diagnostic system used with a smart device capable of communicating with a network, the medical diagnostic system for performing a portable, fast, field assay of a small sample biological analyte, the method includes the steps of: mixing the analyte, functionalized magnetic beads, and buffer into a homogenous mixture, wherein at least some of the functionalized magnetic beads capture the analyte; transferring the analyte, buffer and functionalized magnetic beads toward a detector; disposing the captured magnetic beads into the detector to allow conjugation of the functionalized captured magnetic beads with the detector; removing uncaptured magnetic beads and other noninteracting components of the analyte or buffer from the detector; and measuring the amount of conjugated functionalized captured magnetic beads in the detector.

In one embodiment the step of mixing includes using microimpellers, electro-kinetic sources such as electrohydrodynamics, electroosmotic or dielelctrophoretic mechanisms, using acoustic ultrasonic sources, using thermal sources, magnetic sources such as magnetohydrodynamic or magnetophoretic mechanisms, or pressure sources as the mixing force in a mixer. More particularly the step of mixing may include using an electrical field as the mixing force in a mixer with a conductive sidewall, using a ferro field flow, using circular copper electrodes, an asymmetric lateral structure or a floating electrode, all of which are conventional means for mixing a fluid. The step of mixing further includes using a pressure field as the mixing force in a mixer using pulse width modulation, a Braille pin actuator, a rotary peristaltic micropump or single chamber micropumps, all of which are conventional means for mixing a fluid. The step of mixing may include using a magnetic field as the mixing force in a mixer using a permanent magnet, magnetohydrodynamic actuation, a rotating magnetic field, a hybrid gradient magnetic field or rotating magnetic microbeads, all of which are conventional means for mixing a fluid. The step of mixing further includes using an acoustic field as the mixing force in a mixer using bubble cavitation, a vibrating membrane, bubbles, micro-pillars or sharp edges, all of which are conventional means for mixing a fluid.

The step of separating may include: acoustophoresis using acoustic pressure to achieve separation based on size, density or compressibility of the constituents; dielectrophoresis using inhomogenous electrical fields to achieve separation based on size or polarizability of the constituents; magnetophoresis using inhomogenous magnetic fields to achieve separation based on size or magnetization of the constituents; mechanical forces using gravity or centrifugation to achieve separation based on size or density of the constituents; or optophoresis using an optical force to achieve separation based on size or refractive index of the constituents.

In one embodiment the step of transferring uses a mechanism employing: air propulsion such as: a heat thermal bubble or mechanical meniscus micropump; a mechanical piston; a micropneumatic pump employing peristaltic membranes; capillary structures; magnetic bead transport such as linear magnetic motors, rotating magnetic arrays, rotating magnetic actuators; syringe-piston membranes; piezo pumps; or magnetic field inductive drivers.

In another embodiment the method further includes the steps of: recirculating the analyte, functionalized magnetic beads, and buffer through a microfluidic circuit to repeat the steps of mixing the analyte, functionalized magnetic beads, and buffer into a homogenous mixture, wherein at least some of the functionalized magnetic beads capture the analyte; separating the captured magnetic beads combined with the analyte from uncaptured magnetic beads not combined with the analyte; transferring the analyte, buffer and functionalized magnetic beads toward a detector; disposing the captured magnetic beads into the detector to allow conjugation of the functionalized captured magnetic beads with the detector; removing uncaptured magnetic beads and other noninteracting components of the analyte or buffer from the detector; and measuring the amount of conjugated functionalized captured magnetic beads in the detector.

In one embodiment, the step of performing magnetically actuated conjugation uses either an electromagnet or a permanent magnet. The magnetic field magnitude e.g..5 Tesla, is used in the current embodiment, but other values are contemplated as expressly being within the scope of the inventon where the magnetic field strength is based on geometrical parameters associated with the microfluidic device. In the event of a permanent magnet, due to the inverse square law nature of a magnetic field strength, the field strength rapidly falls off with the distance. The permanent magnet is able to travel far enough away from the sensor surface such that the magnetic field strength is comparable to the background magnetism, for example 500 Gauss. This allows for the device to vary the magnetic field strength at the sensor surface using microprocessor control of the magnet's position.

The fluid is transported in discrete volumes, for example 50ul, per stroke, thus giving the suspended magnetic nanoparticles time to reach the sensor surface via the control of the magnetic force which then reduces the diffusion coefficient penalty by providing an instantaneous translation of the magnetic nanoparticles from anywhere in the chamber volume to the targeted surface of the SAW sensor. This enables the immunoassay sandwich to conjugate on the sensor surface, and additionally allows for even coverage of the sensor and reduces any inconsistencies caused from the combination of magnetics and fluid flow simultaneously.

The disclosure can be better visualized by turning now to the following drawings wherein like elements are referenced by like numerals.

- Fig. 1 is a visual representation of the functional operations of the microfluidic cartridge and the reader.
- Fig. 2 is a perspective top view of the microfluidic cartridge wherein geometrical features are represented.
- Fig. 3 is a flow chart of the operation of the microfluidic cartridge illustrating the recirculation cycle.
- Fig. 4 is a functional block diagram of the electronic components of the microfluidic cartridge and reader.
- Fig. 5 is a longitudinal side cross sectional view of the microfluidic cartridge illustrating the three levels of structure of the cartridge.
- Fig. 6 is a simplified top perspective view of the microfluidic cartridge of Fig. 5 illustrating the combination of elements employed in the recirculation protocol.
- Figs. 7a - 7d are external views of the faces of the cartridge. Fig. 7a is a top perspective view, Fig. 7b a bottom perspective view, Fig. 7c a top plan view and Fig. 7d a side view.
- Fig. 8 is a partial side cross sectional view of microfluidic cartridge showing the relationship of the manifolds, the SAW detector and the printed circuit board used in the microfluidic cartridge.
- Fig. 9 is a top down perspective view of the portable handheld field assay packaging utilized in the illustrated embodiment.
- Fig. 10 is a bottom up perspective view of the portable handheld field assay packaging utilized in the illustrated embodiment.
- Figs. 11a and 11b are partial views of the cartridge loader/carrier and its mechanical components. Fig. 11a is a top perspective view and Fig. 11b is a side plan view.
- Fig. 12 is an exploded perspective view of the cartridge showing each of the components.
- Figs. 13a - 13c are diagrams of an engineered endospore display system for biological mass amplification for SH-SAW biosensor technology. Fig. 13a illustrates a comparison of whole IgG with F(ab')2 and scFv fragments, Fig.

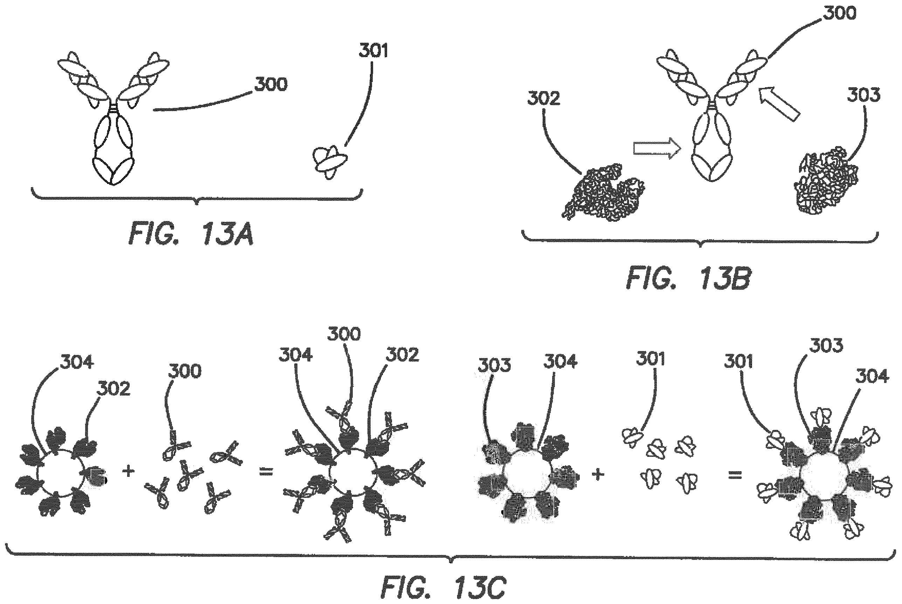

13b illustrates common linker proteins used to bind IgG and scFv's, and Fig. 13c illustrates an endospore display system used to bind any IgG or scFv for mass amplification.

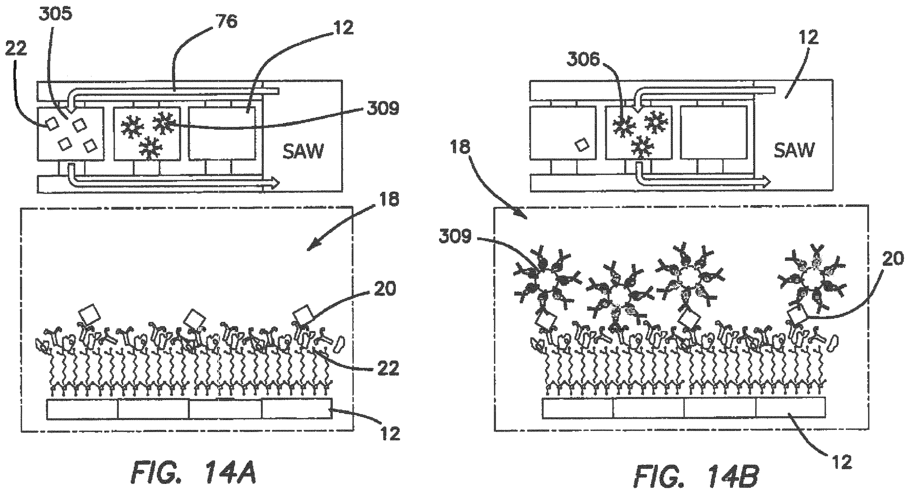

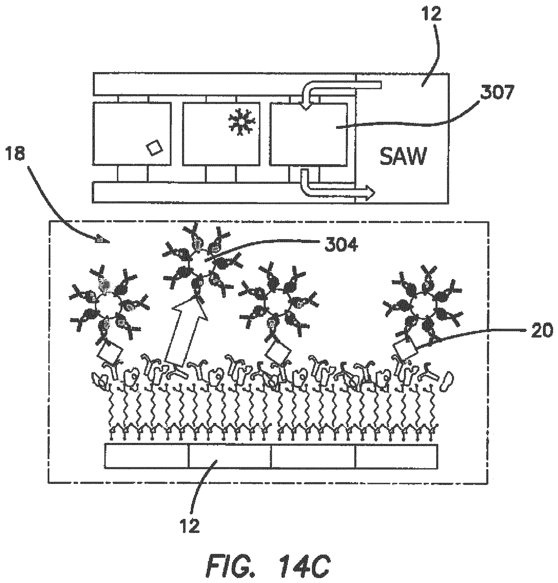

- Figs. 14a - 14c display how convection-enhanced delivery using a multi-reservoir system to sequentially deliver analyte, biological mass amplifiers, and dilute detergent solutions to retain quantitative capability of biosensor measurement and minimize non-specific binding. Fig. 14a shows the delivery of analyte using recirculation, Fig. 14b the delivery of biological mass amplifier, and Fig. 14c delivery of dilute detergent to wash off non-specifically bound entities.

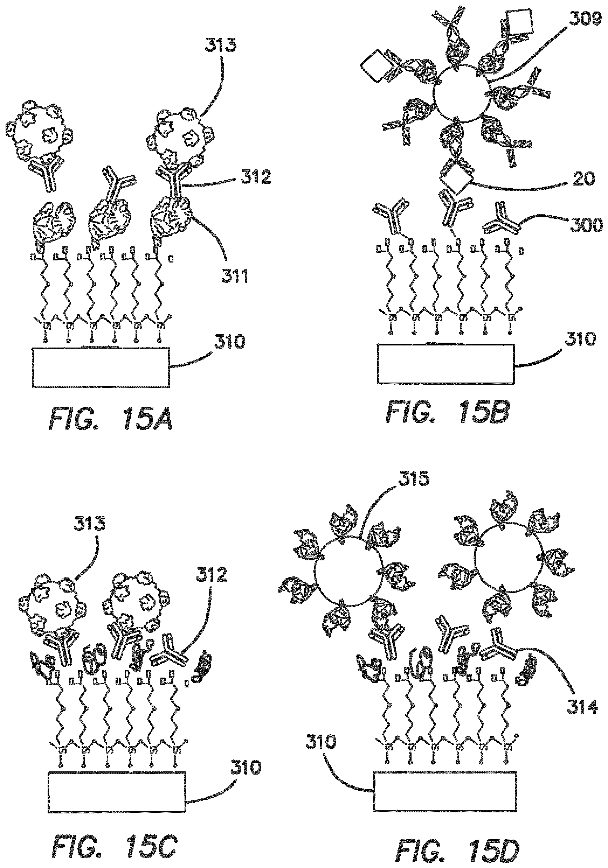

- Fig. 15a schematically displays protein-G orientation-enabled detection of engineered PhiX174-HA virus. Fig. 15b schematically displays detection of all-purpose endospore display mass amplification. Fig. 15c schematically displays a simplified strategy for detection of PhiX174-HA virus for initial studies. Fig. 15d schematically displays a simplified strategy for detection and proof-of-concept of endospore-enabled mass amplification for initial studies.

The disclosure and its various embodiments can now be better understood by turning to the following detailed description of the preferred embodiments which are presented as illustrated examples of the embodiments defined in the clauses. It is expressly understood that the embodiments as defined by the clauses may be broader than the illustrated embodiments described below.

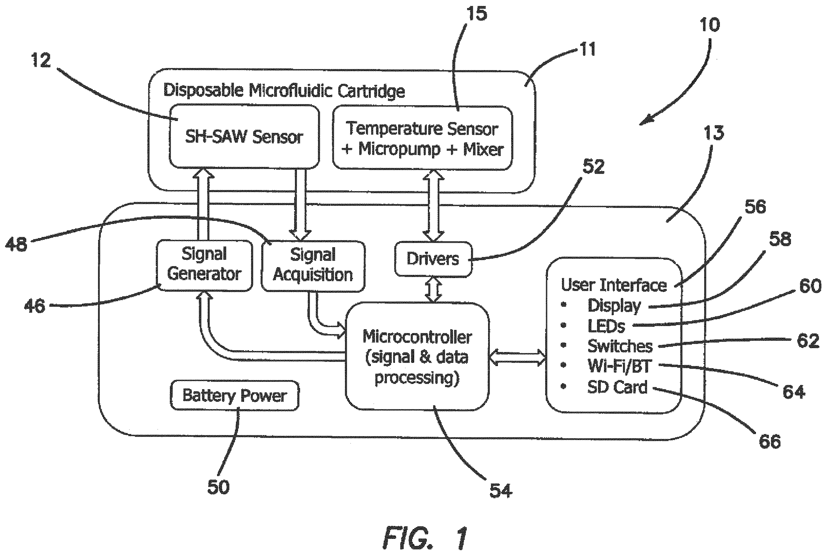

Fig. 1 is a system top level block diagram of microfluidic system 10. Microfluidic system 10 includes a disposable microfluidic cartridge 11 which is inserted into and read by a reader 13. The microfluidic cartridge 11 in turn includes a shear wave surface acoustical wave detector (SAW) 12 and a temperature sensor, micropump and mixer assembly 15. Various embodiments of SAW detector 12 are described in such as described in PCT Patent Application serial no. PCT/US17/48055, entitled Surface Acoustic Wave Biosensor Employing An Analog Front End And DNA Encoded Libraries To Improved Limit Of Detection (LOD) With Exemplary Apparatus Of The Same, filed on 22 August 2017, incorporated herein by reference in its entirety. Reader 13 includes a signal generator 46 that is coupled to and drives SAW 12 and a signal acquisition circuit 48 coupled to SAW 12 for receiving the data signals output by SAW 12. The operation of signal generator 46 and signal acquisition circuit 48 are coupled to microcontroller 54, which provides signal and data processing control subject to software control. Drivers 52 are also coupled to microcontroller 54 and provide the driving and control signals to the elements of the temperature sensor, micropump and mixer assembly 15. User interface 56 is coupled to microcontroller 54 and includes output displays 58, LEDs 60, switches 62, Wi-Fi/Bluetooth connections 64, and secure digital (SD) card connectors 66 as described below. The circuitry of reader 13 is coupled to and powered by a power or battery source 50.

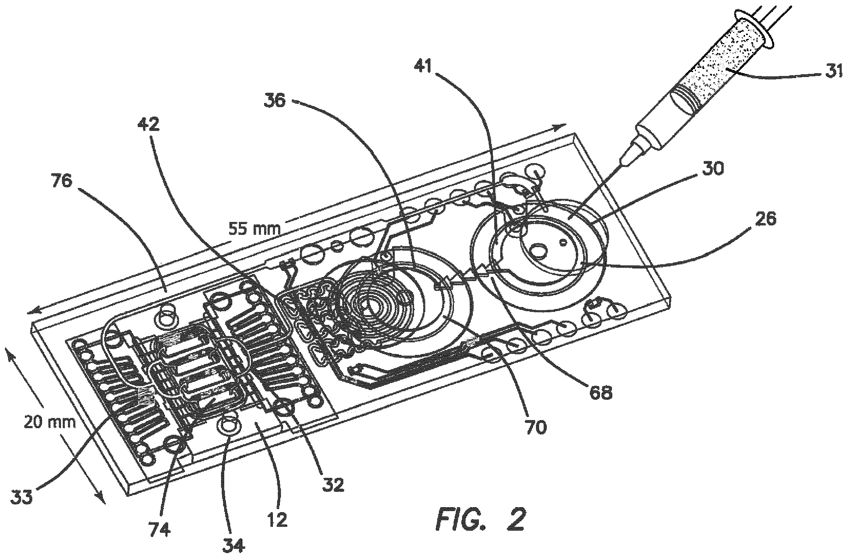

The elements of disposable microfluidic cartridge 11 denoted in Fig. 1 are illustrated in the diagram of Fig. 2. Disposable microfluidic cartridge 11 includes a reservoir chamber 26 in which the analyte 20 is injected in the field through a Tyvek® membrane 30 using a conventional syringe 31 (Tyvek® is a brand of Dupont for flash spun high-density polyethylene fibers). Reservoir chamber 26 includes buffer 24 and is actively mixed with analyte 20 in reservoir chamber 26 by piezoelectric active mixer 41. The mixed buffer 24 and analyte 20, comprising mixture 28, flow through one-way check valve 68 communicated from reservoir chamber 26 to a pump chamber 70 by active of a piezo-pump 36. Bubble trap 70 has a hydrophobic membrane 40 toward which any air bubbles in the mixture 28 are driven and through which the air bubbles escape to ambient atmosphere. The degassed mixture 28 is then pumped into passive mixer 42 to further even the flow rate and mixing. Mixture 28 is then supplied to manifold through which it is supplied to four parallel channels 74 of SAW detector 12 through nozzle-diffuser combination 32 In the illustrated embodiment each channel 74 is approximately 50 $\mu$m high, 1.2 mm wide and 4 mm long. One of the channels 74 is a sensing lane 16, while the remaining three channels 74 are reference lanes 17 of SAW detector 12. Sensing lane 16 and reference lanes 17 are identical with the exception that sensing lane 16 is functionalized with a selected antibody 22 according to the analyte 20 which is being detected. The antibody is preferably mass enhanced by the inclusion of a gold nanoparticle, endospore, magnetic beads, or synthetically coupled mass tags linked thereto. Thus, a fraction of analyte 20 will be captured by the functionalized antibodies 22 in sensing lane 16. Any remaining portion of mixture 28, including all nonhybridized analyte 20 from sensing lane 16 and reference lanes 17, are collected in receiving manifold 33 and recirculated through return line 76 to reservoir chamber 26. In the illustrated embodiment, the pumping rate is selected so that the contents of reservoir chamber 26 is recirculated 12 times each minute. A single sampling or measurement is made in microfluidic cartridge 11 once in five minutes. Thus, during a single measure cycle, mixture 28 is recirculated through microfluidic cartridge 11 sixty times. Effective amplification of the small sample 18 is therefore solved by repetitive recirculation, mixing and cumulative hybridization of analyte 20. The rate of circulation within the microfluidic circuit can vary based on parameter such as pressure drop, Reynolds numbers, viscosity of the medium, temperature, geometrical terms, and analytes conjugation properties (such as K+, K-), and diffusion terms. As generally described by the Navier Stoke equation, coupled with the diffusion term.

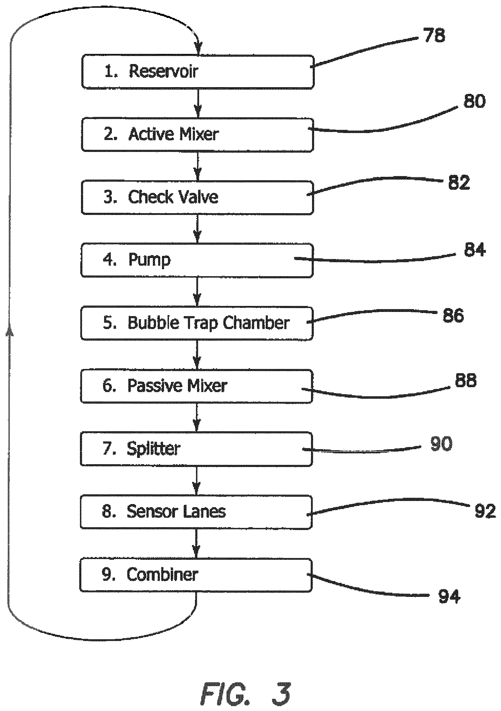

The operational phases of microfluidic cartridge 11 can now be better understood by turning to the simplified flow diagram of Fig. 3. Reservoir chamber 26 is loaded in the field with typically 50 - 100 $\mu$L of sample 18 at step 78 from syringe 31 by injection through membrane 30. Active mixer 41 homogenously mixes analyte 20 with buffer 24 in reservoir chamber 26 and piezo pump 36 positively displaces mixture 28 at step 80 through check valve 68 at step 82. Piezo pump 36 maintains a positive pressure through the entire microfluidic circuit to overcome any pressure drops in the system as denoted at step 84. Mixture 28 enters bubble trap 38 at step 86 and all entrained bubbles are removed from further circulation in the microfluidic circuit. Mixture 28 then flows into passive mixer 42 at step 86, which is a geometric manifold that reduces any remaining inhomogeneity of analyte 20 in buffer 24. Mixture 28 flows into a splitter or nozzle-diffuser combination 32 at step 90 which provides for a balanced distribution of mixture 28 into each of the multiple channels 74 of SAW detector 12. Mixture 28 then flows through sensing lane 16 and reference lanes 17, where the confining 50 μm channel height assures uniform flow across the width of sensing lane 16 at step 92. After exiting channels 74 mixture 28 from each of the channels 74 is combined in receiving manifold 33 and returned under pressure in return line 76 to reservoir chamber 26 at step 94.

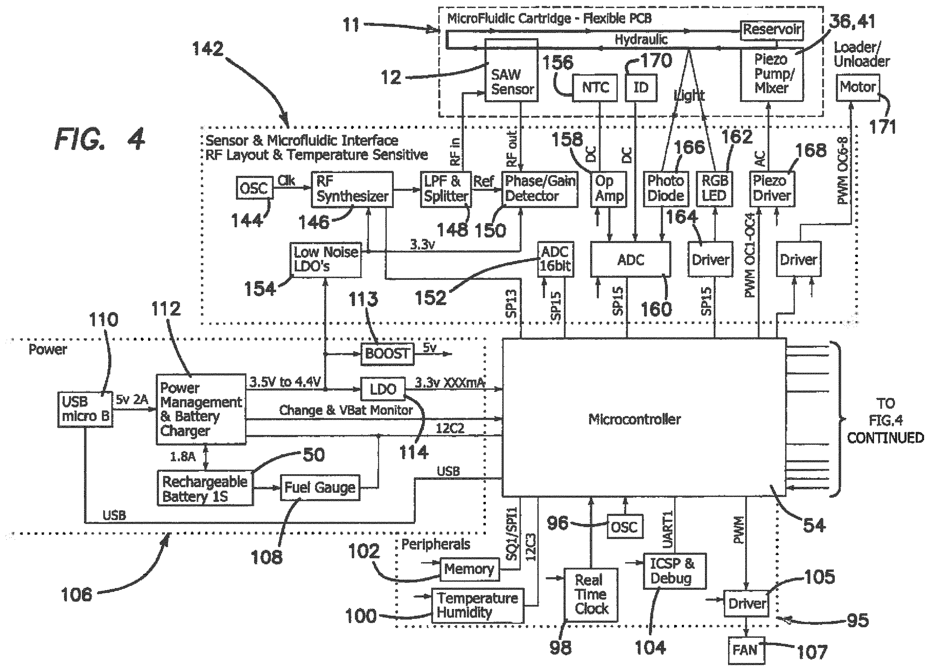

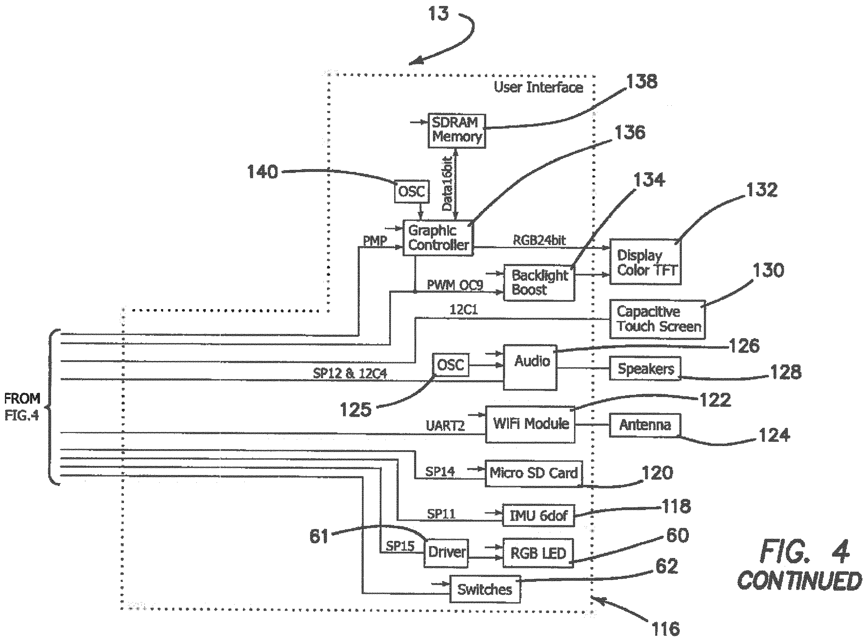

Fig. 4 is a simplified block diagram of the circuitry in microfluidic cartridge 11 and reader 13. The circuitry of reader 13 is logically centered around microcontroller 54, which includes related peripherals 95 such as oscillator 96, a real-time clock 98, an on-board temperature sensor 100, memory 102, in-circuit serial programming (ICSP) module 104, driver 105 coupled to cooling fan 107, all of which are coupled to microcontroller 54.

A power module 106 is also coupled to microcontroller 54 and includes battery source 50, fuel gauge 108 coupled between battery 50 and microcontroller 54, universal serial bus (USB) connector 110 coupled to power management integrated circuit (PMIC) 112 having one output coupled to a low drop out regulator (LDO) 114 and hence all coupled to microcontroller 54. PMIC 112 is also coupled to battery source 50 for charge and voltage monitoring and boost 113 for providing for a boosted DC voltage.

A user interface 116 is coupled to microcontroller 54 and includes in the illustrated embodiment program switches 62, output LEDs 60 with connected driver 61, a six-degrees of freedom inertial measurement unit (IMU) 118 employed by the apparatus to adjust for flow rate relative to gravitational vector in regiments where an orthogonal gravitational vector can't be achieved. Coupled through a serial peripheral interface bus, as is a secure data (SD) card connector 120. A Wi-Fi module 122 is coupled to microcontroller 54 through a universal asynchronous receiver/transmitter (UART) bus, whose output is coupled in turn to an antenna 124 to allow wireless communication by microfluidic system 10 with the internet or other computer network. An oscillator 125, coupled to audio module 126, is coupled to microcontroller 54, whose output in turn is coupled to a speaker 128 so that microfluidic system 10 can communicate with the user through audio messages. Microcontroller 54 is also coupled to a capacitive touch (CAP) display 130 to allow screen touch communication with the user. A thin-film transistor (TFT) color display 132 which is backlight by light 134 is coupled to microcontroller 54 through graphic controller 136, which in turn is supported by an oscillator 140 and synchronous dynamic random access (SDRAM) memory 138 coupled thereto.

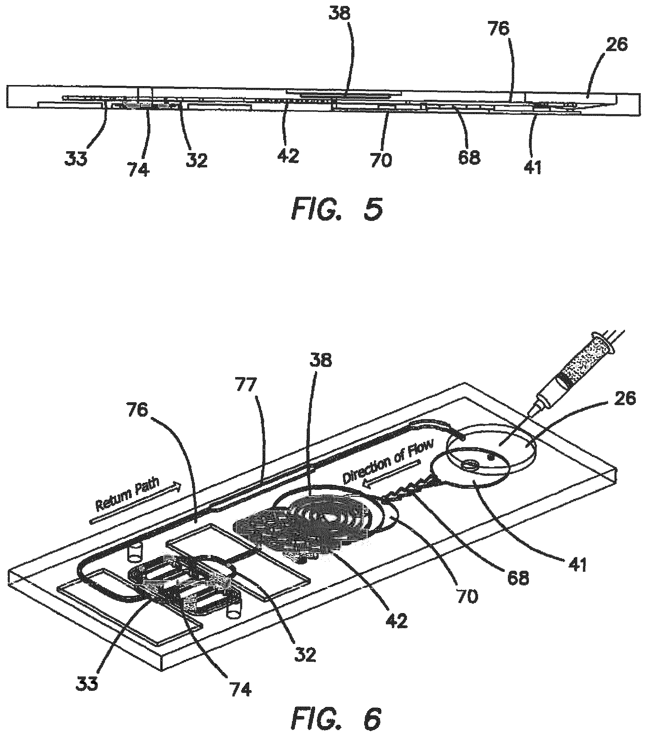

A SAW interface 142 is also coupled to microcontroller 54 to provide a control interface between microcontroller 54 and microfluidic cartridge 11. Oscillator 144 provides a clock signal to RF synthesizer 146, whose output is passed through a low pass filter and splitter 148 to drive SAW detector 12. A reference signal is suppled from low pass filter (LPF) and splitter 148 to phase/gain detector 150 coupled to the output of SAW detector 12. The output of phase/gain detector 150 is converted into digital form by analog-to-digital converter (ADC) 152 and provided to microcontroller 54 as the data signal through a serial data bus. Power is provided from PMIC 112 to low noise low drop out regulator (LDO) 154 to RF synthesizer 146 and phase/gain detector 150. The temperature of mixture 28 in microfluidic cartridge 11 is measured by negative temperature coefficient thermistor (NTC) 156 and provided through operational amplifier 158 to analog-to-digital converter (ADC) 160 and hence to microcontroller 54. Photometric measurements are made possible of mixture 28 by means of an RGB LED 162 powered by driver 164 controlled by microcontroller 54. The incoming optical signal is directed to widened optical channel 77 best shown in Fig. 5 in return line 76 by which optical sensing of the recirculating fluid flow can be measured. The returned optical signal is received by photodiode 166, whose output is digitized by ADC 160 and provided to microcontroller 54. The light absorption spectra received from the recirculating analyte is generating a spectral shift proportional to the absorption rate due to protein or any circulating component within the channel. The resulting signal indicates whether the recirculating analyte are passing through the channel while the microcontroller records the optical signal indicating the presence of lack thereof of analyte within the channel. A man familiar with the art can conceive of an alarm signal and intelligent data gathering associated with such an embodiment as it indicates the presence of suspended analyte concentration. Piezo pump 36 and active mixer 41 in microfluidic cartridge 11 are driven by piezo driver 168 controlled by microcontroller 54. Microfluidic cartridge 11 may also include a biological identification module 170 coupled to microcontroller 54 through ADC 160 by which identification information specific to microfluidic cartridge 11 is read. This safety feature enables a clear distinction by identifying the analyte specificity with a resistor value registered by the resident memory 102 and provides the reader with an analogue distinction of what specific antigen concentration is being recorded. A driver 169 is coupled to microcontroller 54 and thence to a motor 171 for providing for motorized loading of microfluidic cartridge 11 into a cartridge holder 173 for automated and uniform connection of microfluidic cartridge 11 to reader 13.

The arrangement of microfluidic cartridge 11 can be better appreciated by comparing Figs. 5 and 6, wherein the three levels of the flow path structure of microfluidic cartridge 11 can be visualized. Fig. 5 is a side cross sectional view of microfluidic cartridge 11 and Fig. 6 is a top perspective view of microfluidic circuit in the cartridge 11. The top level includes reservoir chamber 26 and spiral bubble trap 38. Beneath the top level is a middle level which includes passive mixer 42, splitters or manifold 32, receiving manifold 33 and return line 76. Beneath the middle level is the bottom level which includes active mixer 41, check valve 68, pump chamber 70, and channels 74. Thus, it can readily be understood and visualized that the mixture 28 starts in reservoir chamber 26 in the top level and is drawn down into active mixer 41 in the bottom level from where it flows up through check valve 68 in the middle level into pump chamber 70 in the bottom level. Mixture 28 then flows up to the spiral bubble trap 38 in the top level and after being de-bubbled flows back down into the middle level of passive mixer 42. Mixture 28 continues to flow to manifold 32 in the middle level and thence is distributed to channels 74 of SAW detector 12 in the bottom level. From channels 74 mixture 28 is then pumped into receiving manifold 33 and along return line 76 in the middle level to reservoir 26 in the top level.

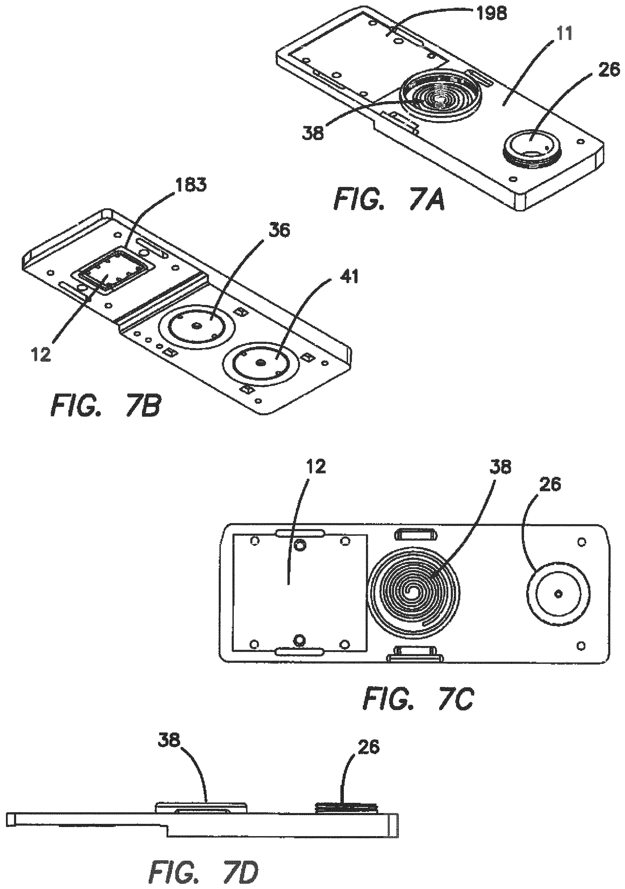

Figs. 7a - 7d show the externally visible components of the cartridge 11, showing in Figs. 7a, 7c and 7d the de-bubble chamber 38, in Fig. 7a top RF shield area 198, in Figs. 7c and 7d reservoir 26, in Figs. 7b and 7c SAW 12, in Fig. 7b gasket gland 183, pump 36 and active mixer 41.

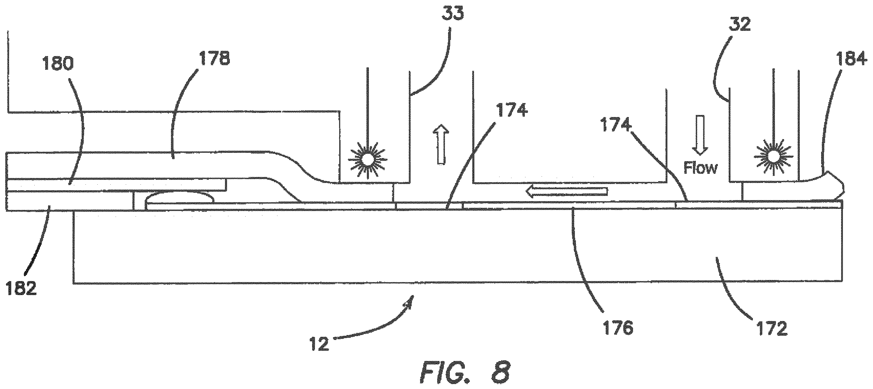

Fig. 8 is a side cross sectional view in enlarged scale of the SAW detector 12 bonded underneath and laser welded to the corresponding adjacent portions of microfluidic manifolds 32 and 33 of microfluidic system 10, which in the illustrated embodiment are made of cyclic olefin copolymer. SAW detector 12 is a conventional LiTaO$_3$ substrate cut for Love Wave propagation with opposing piezo interdigitated transducers (IDT) 174 on each end of a surface waveguide 176 on which are provided sensing lane 16 and reference lanes 17. The flexible printed circuit board 184 to which SAW detector 12 is adhesively coupled includes a 50 $\mu$m Kapton® top layer 202 (Kapton® is a mark of Dupont De Nemours and Co. Corp. of Delaware) underneath which is 35 $\mu$m copper cladding 203 followed by a 50 $\mu$m Coverlay® bottom layer 204 (Coverlay is a registered mark of Coverlay Mfg Inc. of Texas). Printed circuit board 184 continues from the right end of the partial view of Fig. 8 to include conventional mounting locations for the remaining electrical elements of microfluidic cartridge 11 as described above and for RF ground shielding 198 for SAW detector 12.

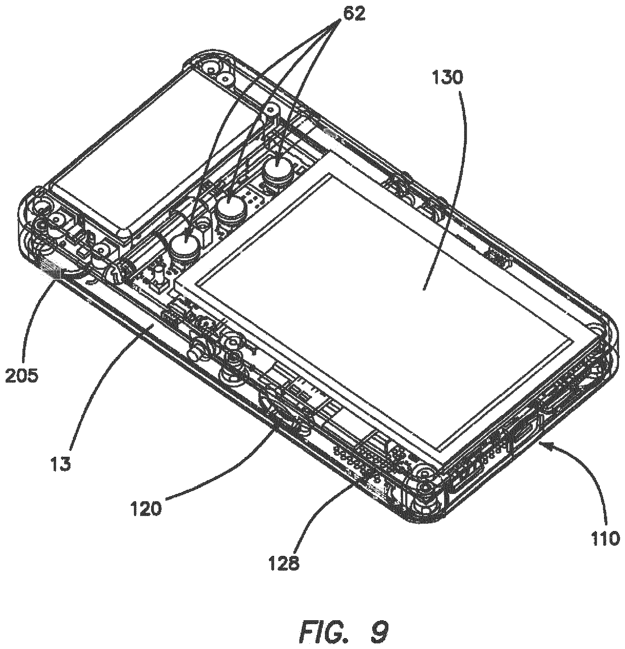

Fig. 9 is a perspective view of one embodiment of the field portable reader 13 into which microfluidic cartridge 11 is inserted. In the illustrated embodiment reader 13 is similar in size to a conventional cell phone, namely 25 mm thick, 180mm long and 100mm wide. Most of the upper top surface is occupied by the capacitive touch screen 130. Microfluidic cartridge 11 is inserted into a conventional side slot loading receiver (not shown) similar to a slot loading DVD drive in a conventional laptop computer. In this manner, microfluidic cartridge 11 is uniformly handled or loaded into reader 13 and shielded or isolated from the environment without undue force or stress applied thereto and without electrode or contact misalignment errors that might result from manual handling by an untrained user. The user interfaces with the device through a series of buttons 62 that control menu features. For output of data, there exists an SD card reader 120, 1 micro-usb output port 110 and a speaker 128.

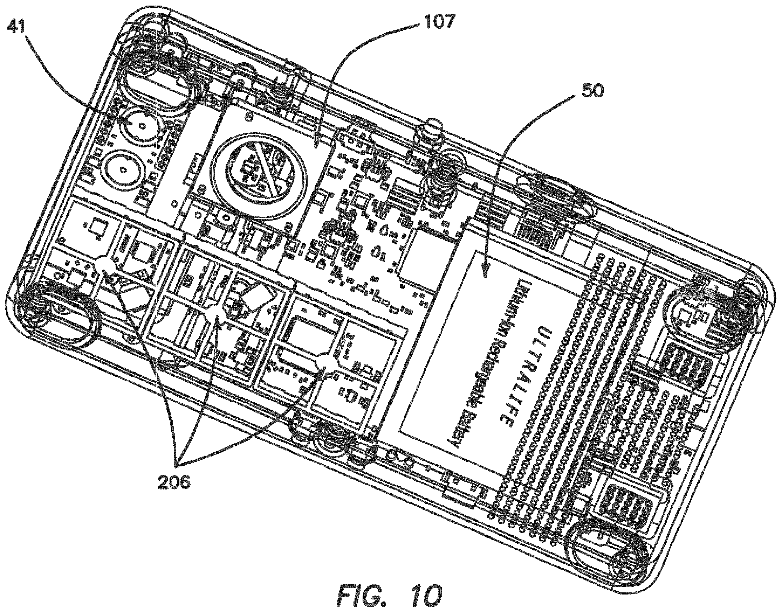

Fig. 10 is a perspective view of microfluidic system 10 from the bottom showing the placement of the battery 50, RF shields 206, active mixer 41 and the fan component 107.

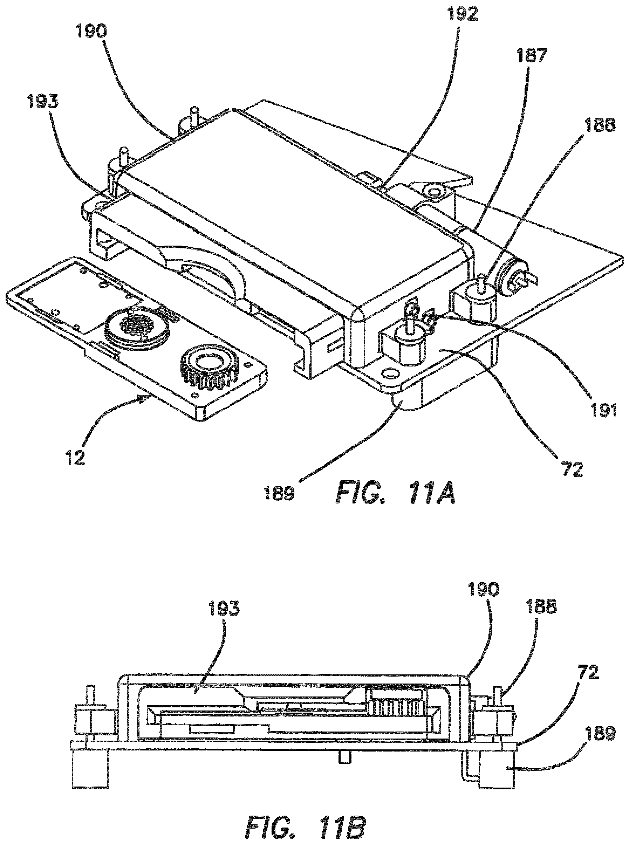

Fig. 11a is a perspective view of the cartridge loader 190 and uninserted cartridge carrier 193. Incorporated into the fluidic cartridge 11 loading mechanism is a Maxton motor 187 and motor cam 192 for motorized loading and unloading of the cartridges 11. The mechanism is attached by dowel pins 188 to a dowel pin base 189 which binds the apparatus to the PCB assembly 72. Fig. 11b is a side plan view of the cartridge loader 190 with the cartridge carrier 193 inserted therein.

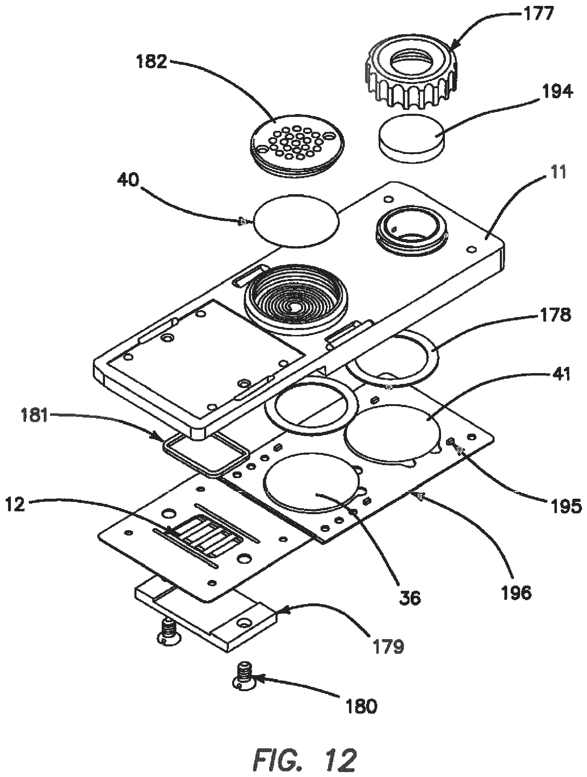

Fig. 12 shows the microfluidic components of the cartridge 11. The reservoir cap 177 fits over the septum 194 to retain sample 18. The de-bubble cap 182 is placed on top of the hydrophobic filter 40 to reduce the number of bubbles that reach SAW 12 surface and effect diffusion timescale. Two piezo seals 178 are incorporated into the active mixer 41 and piezo pump 36 to maintain a closed circuit. SAW 12 is attached to the cartridge 11 by placement on a FPC 196 that holds both the piezo pumps 36, 41 and corresponding chips. Temperature variation is monitored by thermistor 195 reporting to microcontroller 54 as to the actual temperature of the cartridge during the operation and where the microcontroller lookup table residing in memory 102 adjust the flow rate in accordance with Navier Stoke equation. A gasket 181 ensures no sample 18 escapes at the SAW 12 site. A SAW compression bar 179 holds the SAW 12 firmly to the gasket 181, and is held down by two screws 180.

Fig. 13a is a graphical representation of the capture and detection technique employed by the invention whereby a comparison between complete antibodies 300 and scFv fragmented antibodies 301. Fig. 13b indicate how protein A 302 interacts with the complete antibodies 300 and protein L 303 interacts with scFv fragmented antibodies 300. Fig. 13c illustrate how endospores 304 are generated to either express protein A 302 or protein L 303 depending on the capture application, as well as an ELISA chain consisting of an endospore 304, and either protein A 302 and a complete antibody 300 or protein L 303 and a fragmented antibody 301 are conjugated.

Figure 13a, 13b and 13c further illustrate the bio-amplification and mass enhancement endospore 304 of the analyte 20, while illustrating the biochemical *sequencing-events* performed automatically by the microfluidic chamber 14 and directed by the Reader 13. The strategy to develop all-purpose endospore display system for biological mass amplification for SH-SAW biosensor technology is the mainstay of this application and it comprises of an example where Fig.13a is a graphic representation and a comparison of whole IgG antibody with F(ab')2 300 and scFv fragments 301. Fig.13b is a graphical representation of a common linker proteins 302 and 303 used to bind IgG and scFv's. Figure 13c demonstrate the bio- amplification technique where endospore 304 display system is used to bind any IgG 300 or scFv 301 for mass amplification purpose. The technique noted above relate to the fact that concentration of analyte at the range of femtogram to picogram per ml$^{-1}$ are below threshold resolution of the SAW 12 and amplification of mass is a necessary step to obtain measurement at this range. The ability of the preferred embodiment to measure such concentrations and the use of bioamplification while obtaining results commensurable with clinical values is the mainstay of this application.

Figs. 14a - 14c are the graphical representation of the preferred embodiment of the microfluidic 12 whereby three sage convection enhanced delivery (CED) mechanism that contains the analytes 22 in sample 18 introduced into chamber 305 being recirculated in a first step in Fig. 14a through the reservoir sample complex to the SAW 12 and returned through the return line 76. The next step in Fig. 14b shows the utilization of the reservoir endospore complex 309 to administer the biological mass amplifier Ab-conjugated r scFv conjugated endospores from chamber 306, or any other functionalized mass amplifying particles over the SAW 12. The final step in Fig. 14c shows the reservoir detergent complex from chamber 307 to administer dilute detergent to wash off any non-bound endospores 304 from the SAW 12.

Fig. 15a is a schematic representation and example of a bioamplification technique used by the invention in order to demonstrate the ability of mass amplification to employ multiple techniques of mass addon to the SAW 12 employing, for example, viruses such as PhiX174-HA virus 313. Displayed is an initial design of protein-G 311 orientation-enabled detection of an engineered PhiX174-HA virus 313 through an ELISA chain consisting of the silane surface 310, protein G, capture antiHA antibody 312, and the target PhiX174-ha 313. Fig. 15b illustrates the detection using endospore 304 display mass amplification through the creation of an ELISA chain consisting of a silane 310 surface, capture antibody 300, analyte 20, and the Ab-Conjugated or scFv-conjugated endospore 309. Fig. 15c shows a simplified strategy for detection of PhiX174-HA virus 313 for initial studies consisting of a silane surface 310, and capture antiHA antibody 312 and the target PhiX174-HA virus 313 . Fig. 15d shows a simplified strategy for detection and proof-of-concept of endospore 304 enabled mass amplification for initial studies consisting of an ELISA chain of silane 310, COTB capture antibody 314, and CotB amplified endospore 315. It is understood that further mass amplification sandwich techniques such as using functionalized magnetic beads, synthetically generated mass tags, gold nano particles, viruses, microphages or bacteriophages, or any other suitable mass employing an ELISA like sandwich method.

The invention intends to improve the sensitivity of biosensor platforms such as outlined by this application. The embodied biosensor technology can assess real-time surface interactions between an antibody and an antigen associated with a disease state or environmental contaminant. The biosensor platform measures attenuation of traveling shear-horizontal surface acoustic waves (SH-SAW) caused by the accumulation of mass of bound antigens to the sensing area functionalized with a target-specific protein molecule. There are four guiding design principles for this application: time, limit of detection (LOD), high signal-to-noise (SNR), and portability. To achieve these design objectives, the application is divided into two core areas of focus: capture of the analyte from solution, and the detection of the analyte via the SAW sensor.

A typical SH-SAW biosensor measurement results in a steady-state phase shift due to the attenuation of the waveform. The phase shift can be correlated to the mass of antigens bound to the surface when the reaction reaches an equilibrium. Since the SH-SAW biosensor system is essentially a mass detection device, mass amplification strategies are necessary to achieve the desired fg mL$^{-1}$ to pg mL$^{-1}$ limits of detection when working with dilute samples. In one embodiment of the application, these biological mass amplifiers include engineered *all-purpose endospores* that express different epitopes and/or functional groups for bio-conjugation to whole immunoglobulins (IgG) or single-chain variable fragments (scFv). Engineered endospores have the advantage of displaying many binding sites, thereby increasing the rate of reaction. The *all-purpose endospore* for signal amplification is coated with an antibody-binding molecule (protein A for intact antibodies, protein L for either intact antibodies or scFv antibody fragments). ScFv's is utilized to improve the orientation of the binding site and/or enhance the binding affinity to the antigen, both of which result in an increase of the rate of reaction.

In another embodiment of this application, functionalized magnetic beads expressing scFv antibodies on the surface can be utilized to function as a mass amplification technique.

The rapid analysis of dilute samples in a fg mL$^{-1}$ to pg mL$^{-1}$ range can be challenging for even the most sensitive techniques. This is because at the very low concentration levels, there is typically a diffusional limit that restricts the rate of antigen binding. To overcome the diffusional limit, the embodied application biosensor is used in a convective-enhanced delivery modality where the sample is introduced to the surface of the sensor to overcome any diffusional limit imposed by having a dilute solution. To further enhance the signal-to-noise ratio and establish a quantitative measurement, the proposed biosensor employs a multi-reservoir system to sequentially deliver biological mass amplifiers and dilute detergent solutions thereby reducing non-specific binding and associated false positives (see figure 14a, 14b and 14c). When the biological mass amplifier is introduced after the analyte, the binding ratio of amplifier-to-analyte is unity, thus making the measurement quantitative.

In summary, consider the design constraints and solutions realized in the microfluidic system 10 of the illustrated embodiment of the invention as described above. The constraints imposed on the design of the microfluidic chamber 14 arise from the process of the biological conjugation between the analyte 20 and the antibody 22 located on the surface of the SAW detector 12. The microfluidic chamber 14 must address the unavoidable limitations of: limit of detection of the SAW detector (LOD); and the magnitude of the diffusion coefficient. The minimum threshold mass detected by a SAW detector 12 is not less than 1 picogram. The sensitivity of the SAW detector 12 must be set as the minimal threshold above the total SNR of the microfluidic system 10 taking into consideration the total surface area of the sensing lane 16, the density of the antibody 22 located on the sensing lane 16, and the total volume of the buffer 24 of 100 microliters. The design of the microfluidic system 10 is subject to the magnitude of the diffusion coefficient of the sample 18, and subject to the fact that natural conjugation between the analyte 20 and antibody 22 requires many hours to meet the minimum threshold mass of detection in the SAW detector 12. To obtain a signal to reliably represent the actual concentration of the analyte 20 in question, a design of a microfluidic chamber 14 is needed to address the limitation of low concentration of the analyte 20, the density of the antibody 22 on the sensing lane 16 of the SAW detector 12, and the diffusion coefficient limitation.

To overcome these unavoidable constraints the design of the microfluidic system 10 mixes analyte 20, such as any collected endospores or other mass amplifiers, and buffer 24 within a reservoir chamber 26, and generates a homogenous gross mixture 28. In one embodiment the endospore bearing analyte 20 and the buffer 24 are pre-loaded into the reservoir chamber 26 through a syringe 31 and sealing membrane 30, providing a foolproof loading protocol for handheld, field-portal, and disposable device. Since the typical diffusion coefficients would normally entail time domain which do not lend to the intended use of the invention as the device is meant to act as a handheld field portable providing a near real time analytical results compared to conventional sensing techniques as ELISA, PCR, and existing SAW techniques. The design of microfluidic system 10 uses a recirculating manifold 32 to enable the analyte 20 in a 100-microliter sample 18 to be sufficiently exposed to the antibodies 22 functionalized on sensing lane 16. In general, the analyte 20 must be positioned within 1 micrometer of the antibody 22 before capture or hybridization is possible. Recirculation of sample 18 increases the probability of the analyte 20 to fall within the hybridization range of the antibody 22 on the surface of the sensing lane 16, thereby overcoming the limitation of the diffusion coefficient. Unidirectional flow within the microfluidic chamber 14 is ensured by the use of check valve geometry or a nozzle-diffuser combination 34. A piezo pump 36 provides a convection enhanced delivery of mixture 28 to provide for uniform and controlled flow across the entire microfluidic chamber 14 based on duty-cycle and amplitude of the applied voltage (the duty-cycle is tailored to the association rate K+ and K-). The microfluidic chamber 14 incorporates a bubble trap 38 to maximize surface contact with a hydrophobic membrane 40 to release air within the mixture 28. Passive mixer 42 upstream from the SAW detector 12 enables a fine mixing of the mixture 28. A splitter-combiner 44 between the passive mixer 42 and SAW detector 12 provides for balanced distribution of mixture 28 into each of multiple lanes or channels 74 in SAW detector 12.

In the illustrated embodiment, the handheld device and portable detector used in the field is characterized by:

1. A time constraint of no more than 10-15 min to obtain results which are statistically commensurable with industry standards.

2. A diffusion coefficient as well as capture rate (K+/K-) are constants that cannot be altered, but by the use of convection enhanced delivery through recirculation technique provided by the manifold and its propellant mechanism, the increase of kinetics of the analyte within the buffer solution is increased, thereby reducing the time domain by increasing the probability of encounter of an analyte element with the antibody at the sensing lane of the SAW.

3. A mass enhancement technique is demonstrated experimentally by using gold nanoparticles, PHIX viruses, endospores, and or magnetic beads which reduces the limit of detection to the order of picogram to femtogram $mL^{-1}$ volume.

4. The method is demonstrates the ability of a multichambered fluidic apparatus to eliminate the need for an operator to perform multiple biochemistry steps such as mixing, conjugating, or cleaning (by use of a detergent) to remove unnecessary sedimentation of nonspecific binding particles, thereby reducing false positive results.

Many alterations and modifications may be made by those having ordinary skill in the art without departing from the spirit and scope of the embodiments. Therefore, it must be understood that the illustrated embodiment has been set forth only for the purposes of example and that it should not be taken as limiting the embodiments as defined by the following embodiments and its various embodiments.

Therefore, it must be understood that the illustrated embodiment has been set forth only for the purposes of example and that it should not be taken as limiting the embodiments as defined by the following clauses. For example, notwithstanding the fact that the elements of a clause are set forth below in a certain combination, it must be expressly understood that the embodiments include other combinations of fewer, more or different elements, which are disclosed in above even when not initially claused in such combinations. A teaching that two elements are combined in a claused combination is further to be understood as also allowing for a claused combination in which the two elements are not combined with each other, but may be used alone or combined in other combinations. The excision of any disclosed element of the embodiments is explicitly contemplated as within the scope of the embodiments.

The words used in this specification to describe the various embodiments are to be understood not only in the sense of their commonly defined meanings, but to include by special definition in this specification structure, material or acts beyond the scope of the commonly defined meanings. Thus, if an element can be understood in the context of this specification as including more than one meaning, then its use in a clause must be understood as being generic to all possible meanings supported by the specification and by the word itself.

The disclosure also includes the following clauses:

1. A system for detecting an analyte in a small volume biological sample, the system comprising:
a shear horizontal surface acoustic wave (SAW) detector, and means for convection enhanced delivery (CED) of the sample to the SAW detector.

2. The system according to clause 1, wherein the CED means comprise an analyte recirculation arrangement, for recirculating analyte once the sample has been introduced and circulated in the system.

3. The system according to clause 1 or 2, wherein the recirculation arrangement comprises a plurality of channels associated with the SAW detector and a closed microfluidic circuit in communication with the SAW detector, in which circuit the analyte is mixable with a buffer.

4. The system according to clause 3, wherein the SAW detector and the closed microfluidic circuit are comprised in a microfluidic cartridge.

5. The system according to any of the preceding clauses, wherein the plurality of channels include a sensing channel, in which the analyte is sensed, and a reference channel.

6. The system according to clauses 3-5, wherein the closed microfluidic circuit comprises a microfluidic reservoir chamber where the analyte is mixable with a buffer.

7. The system according to clause 6, wherein the closed microfluidic circuit further comprises an active mixer coupled to the microfluidic reservoir chamber for mixing the analyte and buffer into a homogeneous mixture.

8. The system according to clause 6 or 7, further comprising a one-way valve coupled to the microfluidic reservoir chamber and/or the active mixer.

9. The system according to any of the clauses 3-8, further comprising a pump for providing a positive pressure of the analyte-buffer mixture in the closed microfluidic circuit.

10. The system according to clause 9, wherein the pump and the active mixer comprises a piezo-pump and a piezo-mixer.

11. The system according to any of the clauses 6-10, further comprising a pump chamber into which the analyte is transmitted from the reservoir chamber.

12. The system according to any of the clauses 7-11, further comprising means for degassing the analyte-buffer mixture, which means preferably comprise a bubble trap, more preferably wherein the bubble trap comprises a spiral bubble trap with a hydrophilic membrane.

13. The system according to clause 12, further comprising uniform flow provision means for providing an uniform flow of the mixture, which means preferably comprise a passive mixer.

14. The system according to any of the clauses 7-13, wherein the cartridge further comprises a distributing manifold for distributing the analyte into the plurality of SAW channels from the microfluidic closed circuit.

15. The system according to any of the clauses 3-13, further comprising an analyte return line for returning analyte from the plurality of SAW channels to recirculate in the microfluidic closed circuit.

16. The system according to clause 15, further comprising a receiving manifold for collecting analyte after flow through the SAW detector.

17. The system according to any of the preceding clauses, further configured for bioamplification of the analyte detection.

18. The system according to any of the preceding clauses, further configured for administering detergent for combatting false positives in the analyte detection.

19. The system according to any of the clauses 6-18, wherein the microfluidic chamber includes a perforating membrane through which the analyte is injected into the system.

20. The system according to any of the clauses 3-19, where the plurality of channels consist of one functionalized sensing lane and three reference lanes.

21. The system according to any of the clauses 15-20, wherein the microfluidic closed circuit comprises in sequence:

- the microfluidic reservoir chamber for mixing the analyte and the buffer;
- means for delivering a biological mass amplifier to modify the mass of the analyte detectable in the sensing channel to meet a limit of detection (LOD) of the SAW detector with a predetermined size of the sample, preferably a reservoir; and/or
- means for delivering a detergent solution to retain quantitative capability of biosensor measurement and minimize non-specific binding, preferably a detergent reservoir.

22. The system according to any of the preceding clauses, configured for detecting analyte in the small volume sample of biological analyte, when the small volume sample of biological analyte comprises 100 or less molecules of the biological analyte, for example 10 or less molecules of the biological analyte, for example one molecule of the biological analyte.

23. The system according to any of the preceding clauses, wherein the LOD of the SAW detector is 1 picogram or more of analyte.

24. The system according to any of the clauses 21-23, wherein the biological mass amplifier comprises an endospore.

25. The system according to any of the clauses 21-24, where the biological mass comprises a virus, Ab-Conjugated or scFv-conjugated endospore specifically attached to the analyte through an ELISA chain.

26. The system according to any of the clauses 3-25, where the closed microfluidic circuit recirculates the mixed analyte and buffer through the closed microfluidic circuit a multiplicity of times within a predetermined time period less than or equal to one hour in duration.

27. The system according to any of the clauses 3-26, where the closed microfluidic circuit recirculates the mixed analyte and buffer through the closed microfluidic circuit approximately 60 times within an approximately 5 minute duration.

28. The system according to any of the clauses 6-27, where the analyte and the buffer are combined in the microfluidic chamber using a sample size of the order of 50 μL in an amount of buffer of the order of 100 μL.

29. The system according to any of the preceding clauses, further comprising a processor for processing a signal from the analyte.

30. The system according to clause 29, wherein the processor is comprised in a reader, which reader further comprises a SAW interface circuit, a microcontroller for controlling the SAW detector through the SAW interface circuit, and a user interface associated with the microcontroller.

31. The system according to clause 30, where the reader further comprises a power module coupled to the microcontroller and the SAW interface circuit for providing electrical power.

32. The system according to clause 30 or 31, where the reader further comprises a memory, a temperature and humidity module, a real-time clock, a cooling fan, and an in-circuit serial programming ICSP module coupled to the microcontroller.

33. The system according to any of the clauses 30-32, where the user interface comprises a Wi-Fi module and antenna coupled to the Wi-Fi module, a capacitive touch screen, a color thin-film transistor display and a graphic controller with memory coupled to the thin-film transistor display with a backlight source.

34. The system according to any of the clauses 30-33, where the user interface comprises an audio module with a speaker coupled thereto, a serial data card interface, an inertial motion unit, at least one RGB LED, and at least one program switch.

35. The system according to any of the clauses 30-34, where the SAW interface circuit comprises a clock oscillator, an RF synthesizer coupled to the clock oscillator, a low pass filter and splitter having an input coupled to the RF synthesizer and an output coupled to the SAW detector, a phase/gain detector coupled to the low pass filter and the splitter and having a data input coupled to the SAW detector, an analog-to-digital converter having an input coupled to an output of the phase/gain detector and having an output coupled to the microcontroller, a pump driver, and a motor with a motor driver for mechanically loading the microfluidic cartridge.

36. The system according to any of the clauses 30-35, wherein the reader comprises a slot loader into which the microfluidic cartridge is loadable.

37. The system according to clause 36, wherein the microfluidic cartridge is disposable.

38. The system according to any of the preceding clauses, being a handheld system for performing a filed assay.

39. A method of detecting an analyte in a small volume biological sample, comprising the step of convection enhanced delivery (CED) of the sample to a surface acoustic wave (SAW) detector.

40. The method according to clause 39, further comprising the step of biologically amplifying the mass of the analyte.

41. The method according to clause 39 or 40, wherein the small volume sample is repeatedly exposed to the SAW detector by way of circulating the sample past the SAW detector during a predetermined time period for a predetermined number of circulations.

42. The method according to clause 40 or 41, wherein the analyte is mixed with a buffer.

43. The method according to any of the clauses 39-42, carried out in a system according to any of the clauses 1-38.

44. The method according to clause 43, where mixing and recirculating the analyte with the buffer in the closed microfluidic circuit comprises:

- combining the analyte and the buffer in the microfluidic chamber;
- mixing the analyte and the buffer into a homogenous mixture using an active mixer coupled to the microfluidic chamber;
- removing air bubbles from the mixture using a bubble trap coupled to the microfluidic chamber and/or active mixer;
- providing for a uniform flow of the mixture using a passive mixer coupled to the bubble trap;
- uniformly distributing the mixture into the plurality of channels in the SAW detector using a distributing manifold coupled to the passive mixer;
- collecting the mixture after flow through the SAW detector using a receiving manifold; and
- recirculating the mixture to the microfluidic chamber using a return line.

45. The method according to clause 44, further comprising sequentially delivering the analyte to the sensing channel, sequentially delivering a biological mass amplifier to modify the mass of the analyte detected in the sensing channel to meet the limit of detection (LOD) of the SAW detector with a predetermined size of the sample, and/or sequentially delivering a detergent solution to retain quantitative capability of biosensor measurement and minimize non-specific binding.

46. The method according to any of the clauses 39-45, where 100 or less molecules of the biological analyte are combined with the buffer, or where 10 or less molecules of the biological analyte are combined with the buffer, or where one molecule of the biological analyte is combined with the buffer.

47. The method according to any of the clauses 39-46, for detecting at least 1 picogram of analyte.

48. The method according to any of the clauses 39-47, wherein the biological mass amplification is effected by delivery of an endospore.

49. The method according to clause 48, where delivering an all-purpose endospore display mass amplification comprises delivering a virus, Ab-Conjugated or scFv-conjugated endospore specifically attached to the analyte through an ELISA chain.

50. The method according to any of the clauses 43-47,

where the steps of mixing and recirculating and detecting are performed in no more than 10-15 min to obtain results which are statistically commensurable with industry standards,
where in the step of recirculating use of CED through recirculation provided by a manifold and propellant mechanism is made to increase of kinetics of an analyte within a buffer solution to reduce time required for detection by increasing the probability of encounter of the analyte with an antibody at a sensing lane of a SAW detector,
where in the step of detecting a mass enhancement technique is applied using gold nanoparticles, PHIX viruses, endospores, and/or magnetic beads to reduce the limit of detection to the order of picogram to femtogram mL$^{-1}$ volume, and
where in the step of detecting a multichambered fluidic apparatus is used to eliminate any need for an operator to perform multiple biochemistry steps, such as mixing, conjugating, or cleaning to remove unnecessary sedimentation of nonspecific binding particles, thereby reducing false positive results.

Brief Description of the further Drawings:

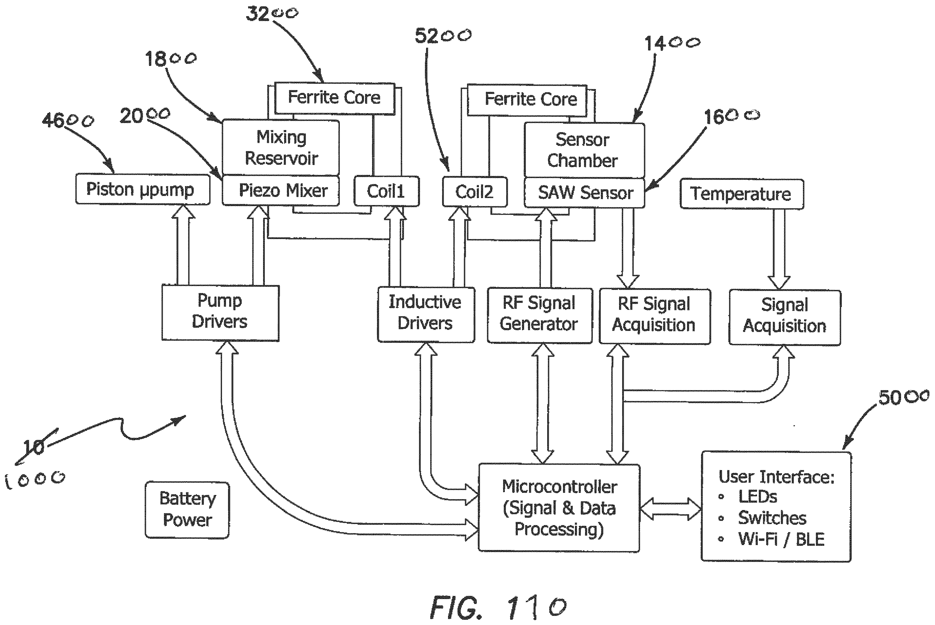

Fig. 110 is a high-level block diagram of the principal components of the invention.

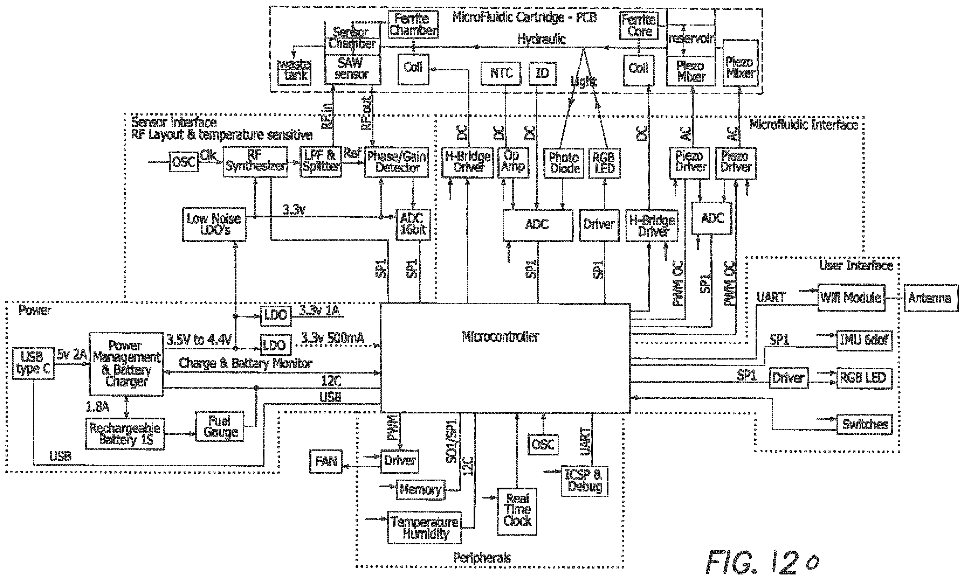

Fig. 120 is a block diagram of the electronic components controlling or coupled to the microfluidic cartridge.

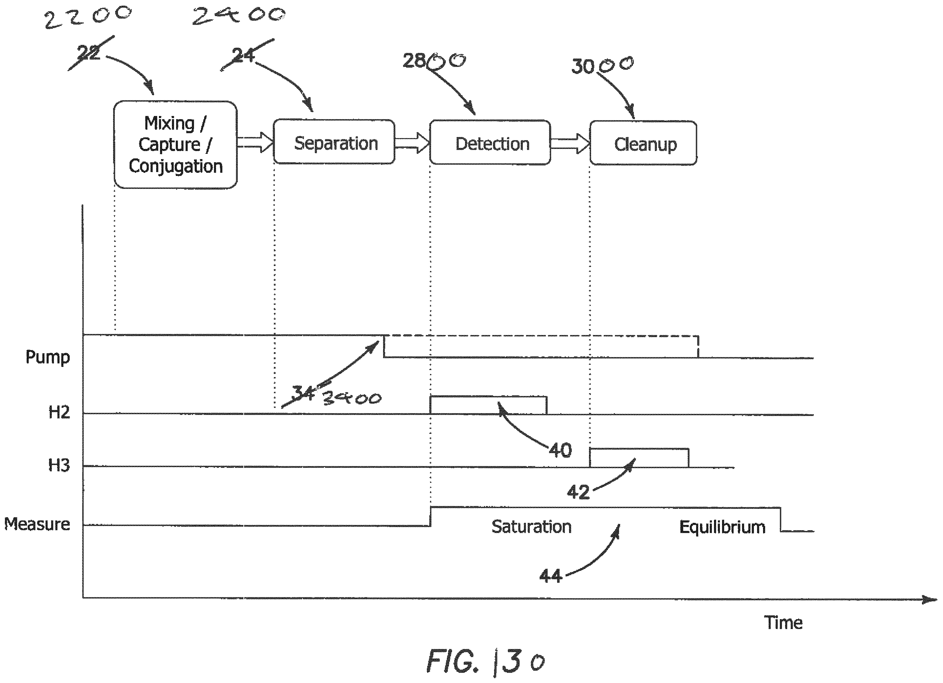

Fig. 130 is a timing diagram of the microfluidic sample delivery sequence used in the cartridge.

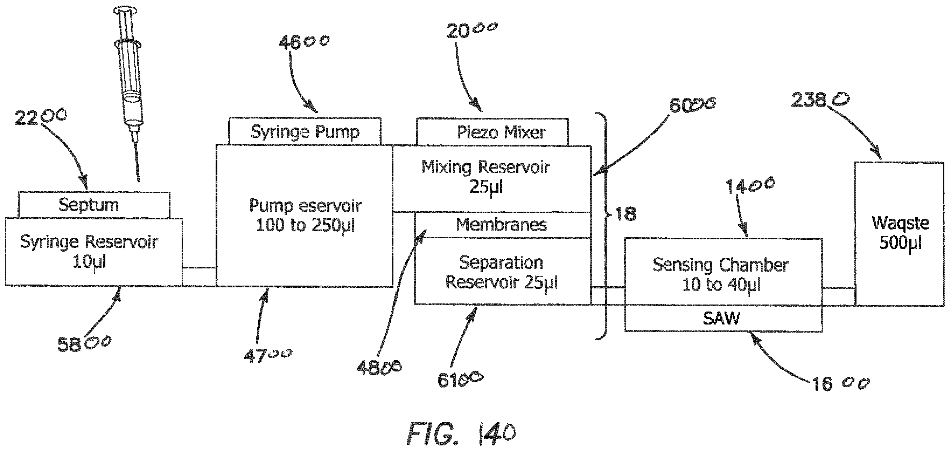

Fig. 140 is a block diagram representation of the microfluidic circuit and its components of the cartridge.

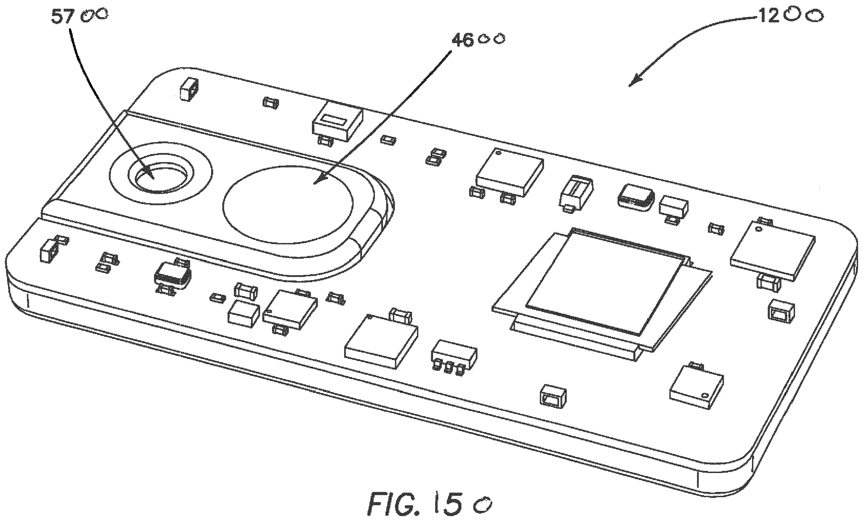

Fig. 150 is a perspective view of a standalone cartridge according to one embodiment of the invention to represent the operation of the delivery-sequencing step.

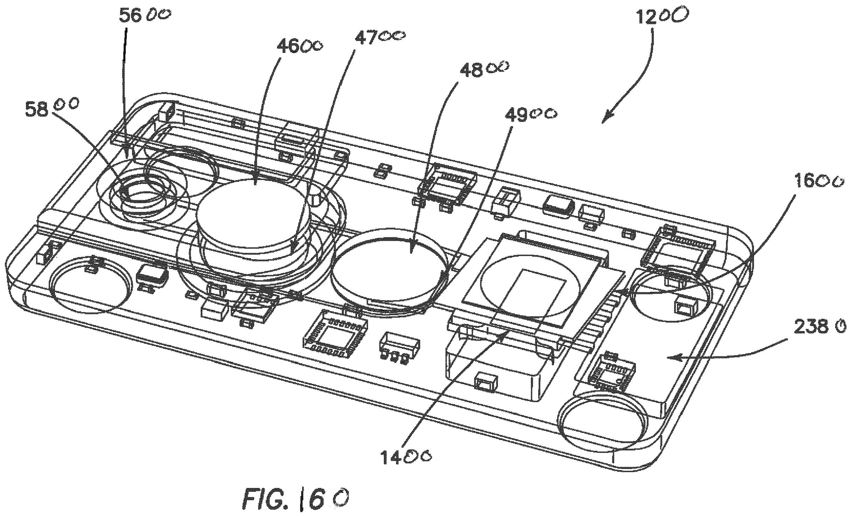

Fig. 160 is an isometric view of the cartridge showing the internal components.

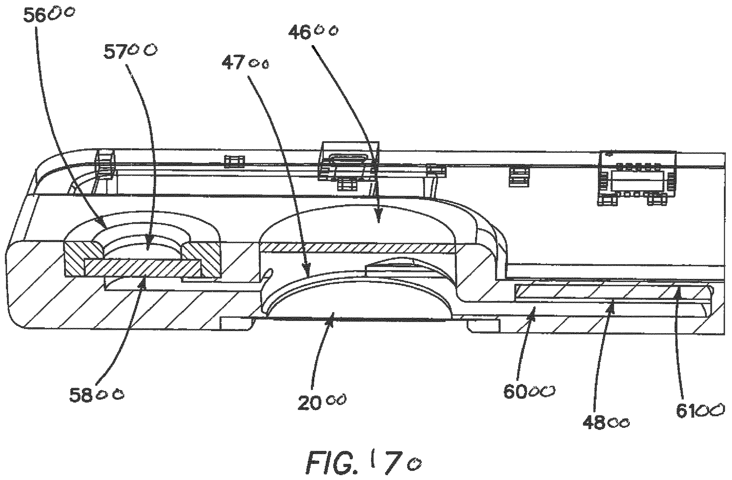

Fig. 170 is a crosssectional isometric view of the cartridge showing the sample injection port, piston pump, and separation chamber.

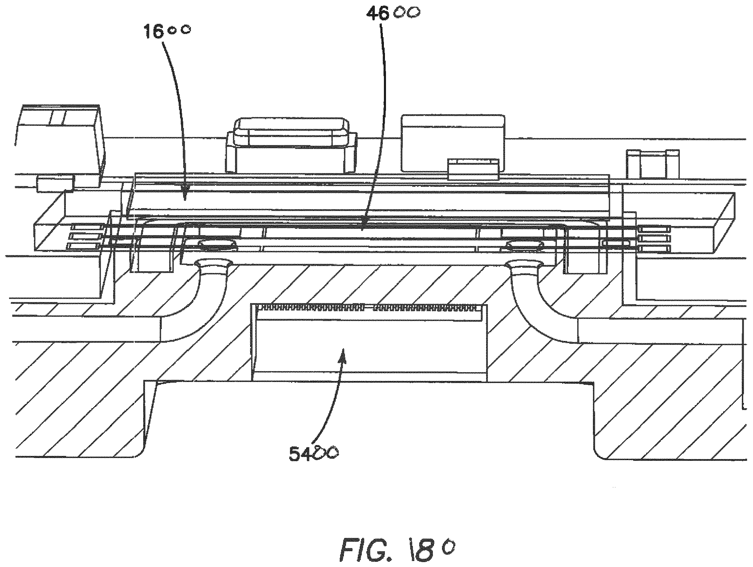

Fig. 180 is a detailed view of the cartridge showing the sensing chamber.

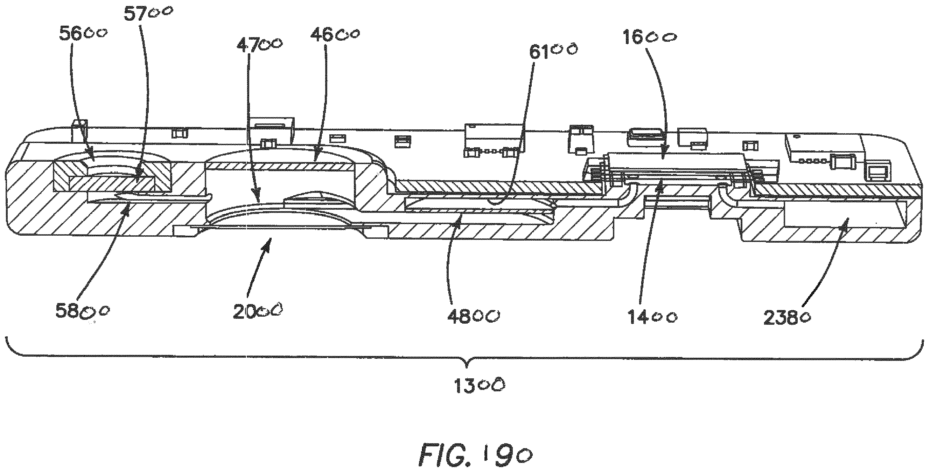

Fig. 190 is an isometric cross section of the microfluidic cartridge and the microfluidic circuit elements.

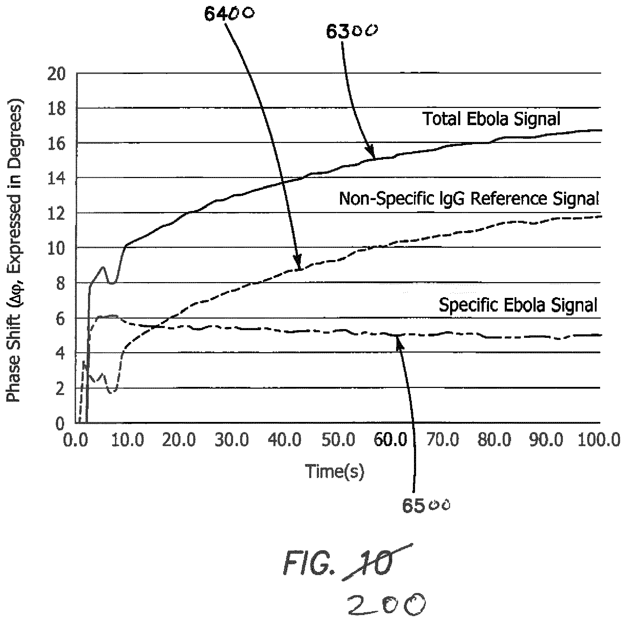

Fig. 200 is a graph of the measured phase shift detected by the SAW sensor as a function of time for a pathogen such as Ebola virus.

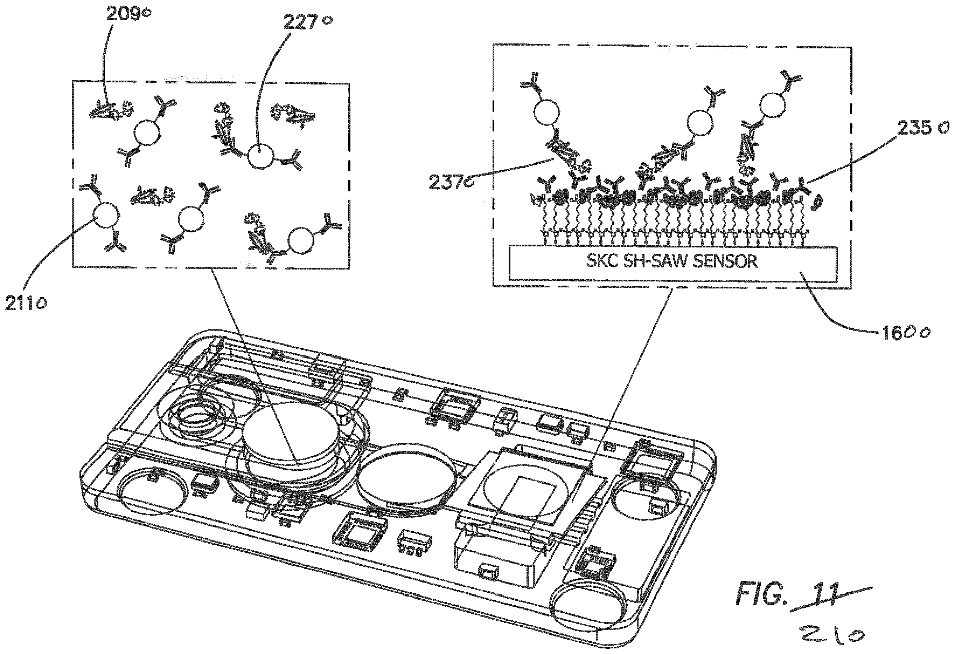

Fig. 210 illustrates an embodiment where a pair of antibodies having unique binding epitopes are used to create a sandwich ELISA style immunoassay.

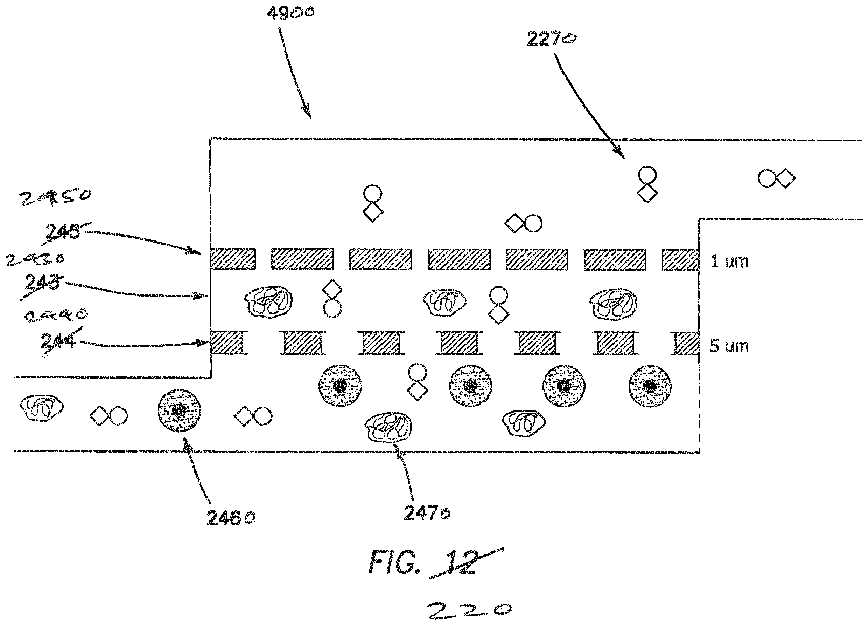

Fig. 220 is a diagrammatic illustration of the filtration chamber and its associated filtration membranes.

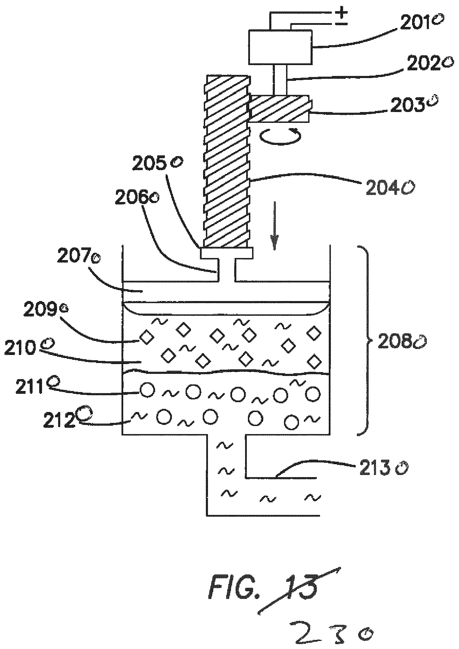

Fig. 230 is an orthographic cross section of the syringe with a pump chamber of the microfluidic circuit.

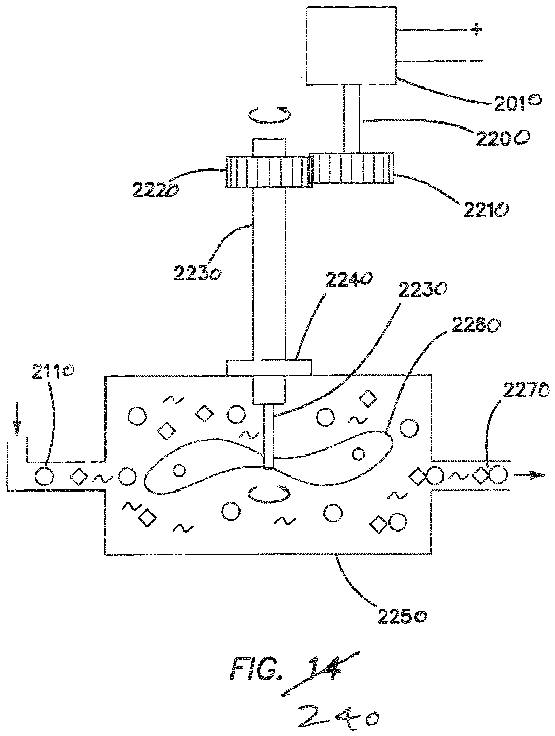

Fig. 240 is an orthographic cross section of the mechanism driving the mixing chamber of the microfluidic circuit.

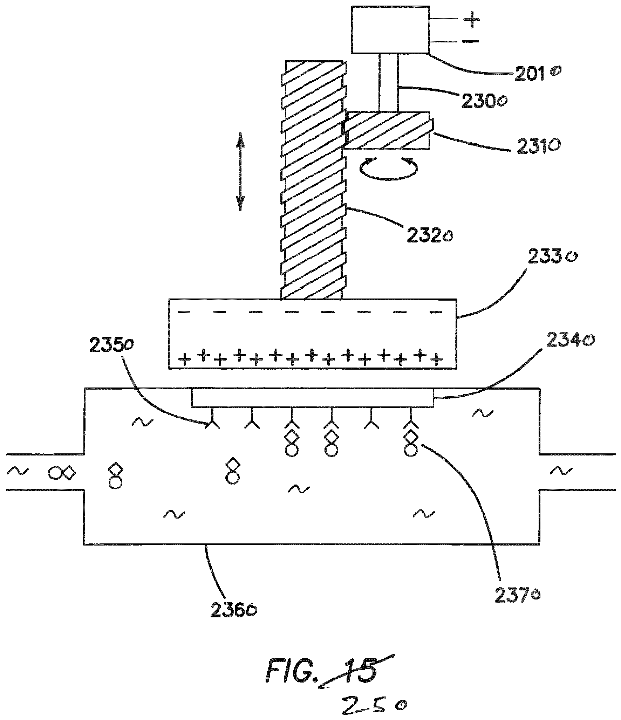

Fig. 250 is a diagrammatic orthographic cross section of a driving mechanism of the permanent magnet located above the sensing chamber of the microfluidic circuit.

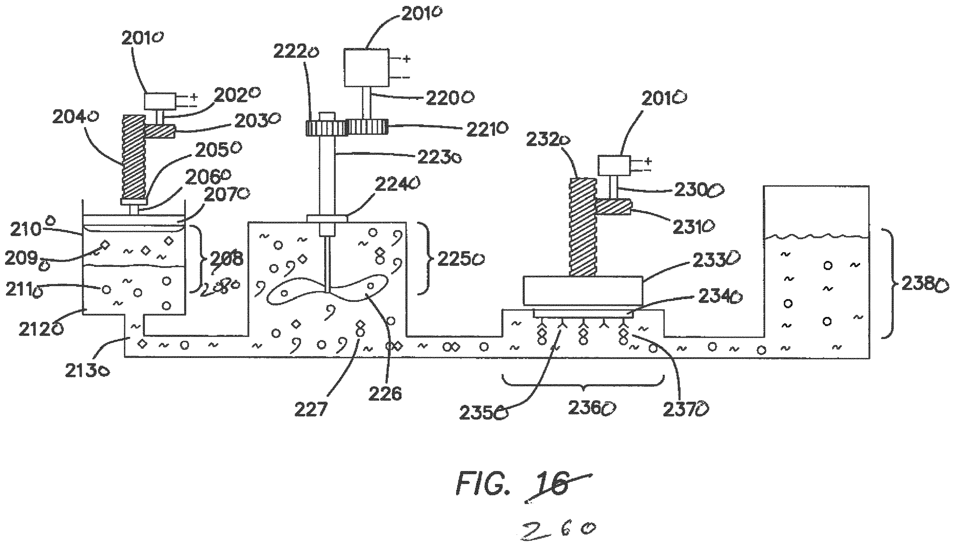

Fig. 260 is diagrammatic illustration of the preferred embodiment of the microfluidic circuit whereby the function of mixing, conjugation, separation, detection, and clean up are illustrated.

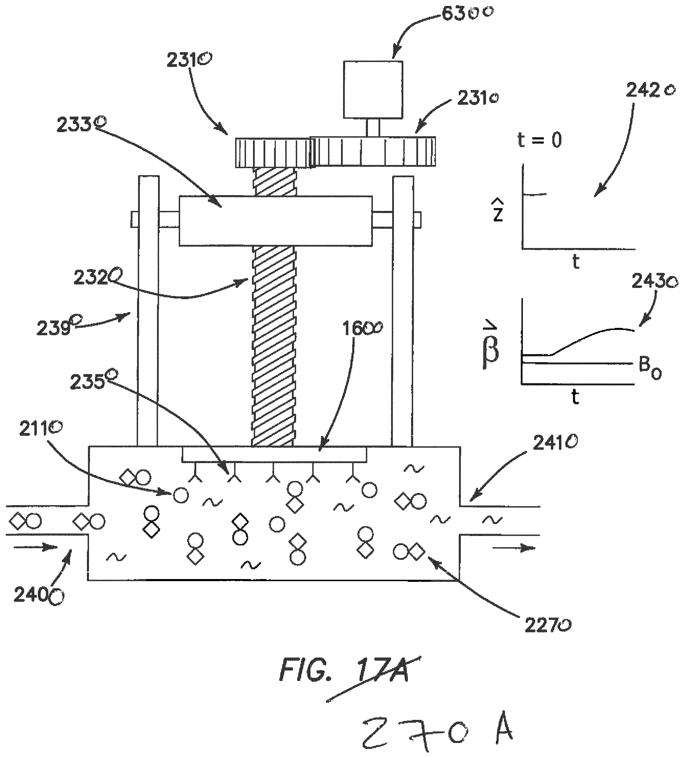

Figs. 270a - 270c illustrate the embodiment of employing a permanent magnet to affect the magnetic nanoparticles in the sensing chamber.

The disclosure and its various embodiments can now be better understood by turning to the following detailed description of the preferred embodiments which are presented as illustrated examples of the embodiments defined in the claims. It is expressly understood that the embodiments as defined by the claims may be broader than the illustrated embodiments described below.

Detailed Description

Lab-on-Chip (LoC) Devices

LoC devices have a particular importance in the application of personal diagnostics. The illustrated embodiments mainly focus on DNA analysis and human disease diagnostics. The illustrated LoC modality has been designed from the ground up to be readily used in different areas such as in diagnostics, bioanalysis, and biosensing for environmental monitoring including testing of water and food quality, for testing of drugs, in pharmaceutic monitoring, and for applications not yet known. It has the advantage of low power consumption, portability, modularity, reconfigurability, and automates the laboratory processes like sample transport, dispensing and mixing, reducing the time and prerequisite necessities of laboratory tests.

SAW Sensor, Microfluidic and "lab on a chip"

The narrative of democratizing diagnostic medicine is in the context of limitations posed by the boundary conditions of the biochemical process, coupled with the fact that such complex operations must be conducted in the field by an untrained patient. Solving these technical challenges, as well as the ability of such apparatus to be realized as a handheld, label free device without the preparatory steps customarily conducted in a laboratory setting, are resolved by an understanding the internal physical, biological and chemical principles that govern such complex process as disclosed below.

While contemplating the entire biochemical reaction between an analyte and its specific antibody, we must answer a set of questions which fundamentally and inherently define the process. This involves the rate of hybridization (the association and dissociation of the chemical process K+/K-, the effect of the diffusion coefficient (D), the flow characteristics of the buffer with its associated biological agent (Navier-Stocks Equation), the physical principles governing the sensing modality (florescent, PCR, ELISA, SPR, optical, resistive, capacitive etc.), and the entire biochemical process and its time duration. The challenges that need to be addressed to employ the illustrated biosensor are mixing, separation, transfer, conjugation and clean up.

Love Wave, Sheer Horizontal Surface Acoustic Wave Biosensor

In the illustrated embodiment a class of acoustic sensors, generally known as a Love Wave- sheer horizontal surface acoustic wave (SH-SAW) biosensor, is the detector type selected for development. It must be understood that other types of sensors could be employed without departing from the spirit and scope of the invention. The SH SAW biosensor was selected for its ability to resolve small mass accumulations over the sensing lanes and for a resolution to account for biological species with mass accumulation on the order of picograms (10-12g) to femtograms (10-15g). The biosensor is intended to deployed in a field setting, where the operator inserts a fluid sample, such as saliva, blood, urine or any combination of biological specimen, without the customary use of laboratory environment. The biosensor performs the entire biochemical test sequences in an automated basis using a "Lab on a Chip" modality. The biosensor device is self-analyzing and transmits the test results wirelessly to the cloud for further use and therapeutic response by the local or remote physician, institution and data collection protocol.

The biosensor device utilizes interactive algorithms to analyze data while employing artificial intelligence (AI) routines, so that the complex variabilities of human disease conditions are sorted based on background data, nested as parametric discriminators in a form of a "Look-Up-Tables". Sorting is performed using statistical measures as: genders, age, geographical location, ethnicity and other relevant medical input parameters to narrow the Gaussian errors associated with population variance.

The aim of "diagnostic on the fly" means that the biosensor device is capable of overcoming the biophysical limited time scales during which the test is conducted (the diagnostic test should be performed within about 10 minutes of sample introduction). The apparatus acts as "lab on a chip" and performs the necessary steps of separating the complex assay of blood, saliva, urine or and body fluids into its components (gross separation), then the reduced assay is physically delivered to a chamber, a method for amplification of the analyte in question is then performed, and the combined immunoassay complex is transferred to a sensing chamber.

Detection

The detection limit (LOD) is an essential element of the biomolecular assay and sensor development. The pressure to push the detection limit of bioanalytical techniques to lower levels, while increasing resolution, is largely driven by a demand for new molecular diagnostic tests for early stage cancer detection and diagnosis. At early stages of cancer development, the amount of cancer biomarker molecules released from the tumor to the blood or other biological fluids is very small. Naturally, one assumes that a more sensitive analytical technique that can "catch" these biomarkers at lower concentrations will allow diseases to be detected earlier. Under this general premise, pursuing lower level detection limits has become a major goal of new bioanalytical technology development, particularly in this application where the use of a biomass having a specificity to a predetermined analyte employs a mass amplifier using orthogonal antibody fragments to respond to the analyte, thereby increasing its detectable mass proportional to the bound analyte to its antibody in the form of a traditional ELISA sandwich. It is not uncommon to see detection limits in the fg - pg ml-1 range for protein antigens, and sometimes even down to the single molecule level.

While pursuing bioanalytical techniques and products with higher sensitivities and lower detection limits, it's important to ask a critical question: is the claimed/expected detection limit theoretically achievable? If by theory, an analytical method cannot possibly achieve the sensitivity as claimed, attempted use of such methods for expected high sensitivity analysis can only lead to a frustration of research effort and resources, and sometimes, misleading results. The issue of limited available biological specimen defined by its concentration (within the acquis volume) and the ability of the detector to sense such limited presence of the antigen is determined by the test apparatus resolution. These and other considerations limit our ability to measure concentration of biological species in the order of pg - ng ml-1.

Detecting biochemical species with LOD ranging from femtogram to picogram values is mandated by the needs of early detection of biological species (biomarkers present in blood, saliva, urine or other bodily fluids), where such species are invariably marked by their low concentration value (Cminimum). Through experimentation, it has been discovered that the limit of detection (LOD) of the SH-SAW sensor is roughly on the order of one picogram. This arises from the frequency used (375 MHz) in the SAW sensor such that resolution is maximized, but elastic energy does not escape the lanes and interfere with detection. For a measurement to be deemed statistically significant by the National Institute of Standards and Technology (NIST), a signal value must be three times stronger than any background noise that is present on the device. The LOD therefore arises from this relationship set forth by the National Institute for Standards, (NIST), whereby the operational frequency (e.g. 325 MHz) and the phase shift of the signal as detected by the embodiment of employing a surface acoustic wave sensor is thereby reduced to the following equation:

$$LOD = (3 \times Nf / S\sigma\phi \times \phi0)\ \Delta\sigma r = 3 \times Nf / (S\sigma\phi \times \phi0).$$

Where Nf is he operational frequency, $S\Phi\sigma$ is the sensitivity of the device with reference to phase and standard deviation, or is standard deviation of the reference signal, $\Phi$ is the phase measurement obtained from the surface acoustic wave sensor, $\Phi0$ is unmodulated phase (reference), $\Delta\sigma r$ is the spread of acceptable standard deviation as imposed by the NIST (Signal must be 3X above the background noise).

Diffusion Coefficient (D) and Fluidic Transport

The major limitation arising from the requirement for a short testing time (10 minutes) is the limits of diffusivity. Diffusivity or the diffusion coefficient, is a proportionality constant of the flux of a concentration (such as a test analyte) due to its molecular properties over the gradient in the concentration of the species (the driving force for diffusion). Diffusion limits the speed at which analyte can fall out of suspension onto the sensor surface. Left to be unperturbed by our device, the mass amplifiers could take hours to fully diffuse thorough the fluid sample and interact with the target analyte. Hence, the first step is a mixing event to homogenize the sample and the buffer. There are many ways to provide this function, such as through microfluidic recirculation to continually perturb the concentration gradient and induce mixing in the fluidic pathway, or using external forces on the sample, such as by using an electromagnet to agitate magnetic beads, or by having a motorized stirring component.

The biosensor is specifically engineered to the analytes in the fluid motion and its behavior. The Navier-Stokes Equations are a set of conservation equations that dictate the behavior of fluid motion. By simultaneously solving both for conservation of momentum and mass, the behavior of the fluid flow can be obtained. For a Newtonian fluid, the momentum conservation is expressed as:

$$\rho(\partial\mathbf{u}\partial t + \mathbf{u}\cdot\nabla\mathbf{u}) = -\nabla p + \nabla\cdot(\mu(\nabla\mathbf{u} + (\nabla\mathbf{u})T) - 2/3\ \mu(\nabla\cdot\mathbf{u})\mathbf{I}) + \mathbf{F}\ ,$$

Where $\rho$ is the density of the fluid, u is the velocity vector of the fluid, t is time, p is pressure, $\mu$ is the fluid viscosity, T is temperature, I is the inertial force of the fluid, and F are externally applied forces.

While the conservation of mass is expressed as:

$$\partial\rho/\partial t+\nabla\cdot(\rho\mathbf{u})=0$$

For the momentum equation above, the terms represent (1) inertial forces, (2) pressure forces, (3) viscous forces, and (4) external forces. For application in microfluidic flow modeling, a second principle must be introduced to reduce the equation so that it can numerically be computed and utilized in the design stage of development. The Reynolds number, Re, is a dimensionless number that expresses the ratio of 1) inertial forces to 2) viscous forces. It can be calculated from the equation:

$$Re=\rho\mathbf{u}L/\mu$$

where $\rho$ is the fluid density ($kgm3$), $\mathbf{u}$ is the fluid velocity ($m/s$), L is the characteristic linear dimension of the application ($m$), and $\mu$ is the dynamic viscosity ($P\alpha{\cdot}s$). For Re < 1, viscous forces dominate, and the flow is laminar. For this application, the computed Re is low. Therefore, for the Navier-Stoke fluid transport equation for this application, the inertial term (1) and external forces (4) are neglected. Additionally, the incompressible nature of the fluid at application velocities means that the velocity gradient term is also neglected. The combined Navier-Stoke equation for laminar regime therefore reduces to

$$0=-\nabla p +\nabla\cdot(\mu(\nabla\mathbf{u}+(\nabla\mathbf{u})T)) \text{ and } \partial\rho\partial t+\nabla\cdot(\rho\mathbf{u}) = 0.$$

This system of equations, coupled with the boundary conditions arising from the geometry of the apparatus, is used to numerically solve for both a pressure and velocity field within the microfluidic circuit. Additionally, within the timescale of our application, the fluid circulates approximately 50 times thorough the circuit. As a result, during any of the 50 circuits or loops, any analytes that pass within 1 $\mu$m of the chip are associated onto the surface. This repetitive looping combined with mixing results in an increase in the statistical odds of the analyte samples being encountered by the antibodies. Because of this, the diffusion coefficient term of the convection diffusion equation at the removal site R can be neglected, as the scales in which convection are able to deliver analytes are much faster than diffusion such that it becomes negligible.

There exists a tool to be utilized in quantifying the effects of mass transport through convection and diffusion. The Péclet number (Pe), is a dimensionless number which expresses the ratio of contributions of mass transport via convection and diffusion:

$$Pe=N\text{conv}/N\text{diff} = ci|\mathbf{u}|/D\nabla ci = LU/D.$$

As the Reynolds number describes contributions to momentum transport, the Péclet number expresses contributions to mass transport across a characteristic length scale L. The Péclet number is solved for and found to be virtually zero. Because the Péclet number is much less than one, the mass will primarily be transported via diffusion from the fluid onto the chip at the length scale of analyte-antibody interaction. This is incorporated into the greater convention enhanced delivery (CED) flow model concept by a virtual increase in the diffusion coefficient through homogenization before the fluid reaches the sensor via a passive mixing site incorporated into the microfluidic system. By decreasing the characteristic length scale of diffusion even further in these mixing sites, an increased concentration gradient arises which leads to the occurrence of mixing by diffusion, but at greatly reduced timescales. Although the antigens are deposited via diffusion onto the chip, the convective mixing helps to replenish the lower layers by mechanical homogenization and prevents a concentration gradient from developing that would impede sensor saturation timelines. Because of the electrochemical attraction that exists between an antibody and antigen, there exists a range in the fluid flow for which spontaneous capture is likely to occur. As a result, homogenization allows for quicker sample saturation as with each pass the lower layers are refreshed and do not have to act on diffusion timescales to replenish the layers in which capture can occur.

Conjugation between Analyte and antibody-The Association Rate

There exists an intrinsic association rate $K \equiv kon/koff$ that dictates the capture rate of analytes to the fragmented antibody layer. This property is intrinsic to the covalent reaction between the analyte and its receptor antibody. Although the electronic affinity for capture between a single antibody and its target analyte cannot be altered through biochemical techniques, it can be virtually increased through several different geometrical applications. One such application is the increase in the total number of available antibody capture sites. By increasing the capture site density on the sensor, a virtual increase is created in the association rate between antibody and analyte, as spontaneous capture is inherently more likely to spontaneously occur as the number of available binding sites increase. Simultaneously, advances in biochemical laboratory techniques allow for the packing density of single chain fragment variable (scFv) antibodies onto the surface with greater preferential directionality.

The antibody fragments we choose for our sensor and mass amplifiers are designed to have a high affinity for binding to a particular analyte while possessing a mass much greater than the analyte to be more readily detectable by the SAW sensor. Additionally, antibody fragments possess a vectoral affinity and rigidity that works to support the strategy of mass amplification regarding surface acoustic wave sensing modality. By employing mass amplifiers, a three-piece sandwich ELISA is created, consisting of an antibody capture site welded to the sensor, a target antigen captured from the fluid sample, and a mass enhancing particle, such as a gold magnetic nanoparticle or a magnetic bead. Because a single mass amplifier has a mass thousands of times greater than the target antigen, this ELISA binding process allows us to detect target materials that would otherwise be undeletable because of the LOD of the device.

The addition of mass loading to the SAW sensor during shear wave propagation enables a detectable phase shift in the acoustic waveform to be observed because of the attenuation of the surface shear waves in response to the additional mass. This correlates directly to the ratio of analyte surface coverage of the SAW sensor at equilibrium to total available surface sites as explained below. This final solid-state phase shift is registered electronically by a reader mechanism which uses a microprocessor to analyze the data and store or transmit the results to the user be it the physician or the institution.

Given an antibody-antigen reaction that follows an adsorption pattern according to the Langmuir Isotherm, the surface adsorption process is be expressed as:

$$[Antibody] + [Analyte] \Longleftrightarrow [Antibody-Analyte\ complex]\ ,$$

$$\text{or } [Ab] + [S] \Longleftrightarrow [AbS]$$

With forward reaction constant kon and reverse reaction constant koff. The adsorption can be described using the differential equation:

$$d\Gamma/dx = D(\partial C/\partial x)$$

where C is concentration; $D \equiv$ *Diffusion Constant* (*cm2/s*), Where $\Gamma \equiv$ *Surface coverage* (*molecules/cm2*), and the equilibrium constant:

$$K \equiv kon/koff = \Gamma/(\Gamma max - \Gamma)Cb; \Gamma equilibrium = \Gamma max KCb$$

where $\Gamma max$ is the total number of available antibody binding sites on the surface of the detector, kon is the antibody association rate, koff is the antibody disassociation rate, Cb is the concentration of the analyte. The kinetics can be related to the rate of diffusion in the solution by

$$JD = Rate\ of\ diffusion = D(\Delta C)/L,$$

Where $\Delta C$ is the concentration gradient of the suspended particles, L is the diffusion length and the simple Langmuir first-order rate of adsorption (for low coverage) at the surface, JR: *JR=kads CS* ($\Gamma max$-$\Gamma$), where kads is the equilibrium constant. When using the SAW Biosensor, the endpoint is typically used i.e. when the system reaches an apparent steady-state (the delta phase value levels off). At steady-state:

$$JD = JR \therefore D(Cb-Cs)L = kadsCs(\Gamma max - \Gamma)$$

solving for the surface concentration at steady state:

$$CS = Cb/(1+kadsL(\Gamma max-\Gamma)/D), \text{ or } CS=Cb/(1+\theta),$$

where $\theta$ is known as the Thiele modulus, a dimensionless parameter. For cases where the value of $\theta \gg 1$, Cs approaches 0, and any antigen contacting the surface will be absorbed onto it. In this case, the rate of surface coverage is determined by the rate of diffusion in solution or :

$$JD=D(Cb-CS)L.$$

For cases where $\theta \ll 1$; Cs approaches Cb. Therefore, the diffusion in the solution is faster than the adsorption and the kinetics of the process is governed by the rate of adsorption at the surface. In this case:

$$JR=kadsL(\Gamma max-\Gamma)$$

When not in a limiting case, the equation for Cs is solved. Based on literature values, the value of $\theta$ is calculated to be 2x10-9; $\theta \ll 1$. Assuming a Diffusion constant given by the Stokes-Einstein equation gives:

$$D=kbT/6\pi\eta r \cong 5x10 -7$$

where kb is the Boltzmann constant, and $\eta$ is the dynamic viscosity. The packing density of the antibodies nanoparticles in the immunoassay assay is estimated at $1010 molecules/cm2$.Therefore, the rate of change of the surface coverage can be given by an adsorbing species is given by the simplified equation:

$$d\Gamma/dt = kadsCb(\Gamma max-\Gamma).$$

Since all experiments are performed at approximately the same temperature (temperature-controlled cartridge), assume that *kads* remains constant. Integrating with initial conditions:

$$\Gamma(0)=0; \Gamma(t)=\Gamma,$$

the solution becomes:

$$\Gamma = \Gamma max(1-ekadscbt), \text{ or } \Gamma/\Gamma max = 1-ekadscbt.$$

The time constant which determines the relaxation time for each run, $\tau$, is given as $\tau=1kadscb$. The $\Gamma/\Gamma$max is directly proportional to the corrected, normalized phase change. Therefore, the correlated values:

$$\Gamma/\Gamma max = delta\ phase\ (sample)/delta\ phase\ standard\ (glycerol) =$$

$$1-e(-t/\tau).$$

The signal is assumed to reach saturation at the end of $3\tau$, which corresponds to 95% of the delta phase value. This is estimated to be less than 10 minutes. The delta phase values depend on both the concentration of the antigen and the incubation time. The transient is assumed to typically last less than 10 min but is dependent and the antigen antibody combination.

Shear Horizontal SAW CHIP

Elevated troponin levels generally indicate heart damage unless proven otherwise. It's presence in the blood indicates heart failure, and a sudden spike in troponin levels indicates a heart attack. When the heart muscle tissue is damaged, it releases the protein troponin into the blood stream. Typically, when a patient is admitted into an emergency care unit complaining about chest pains, a sample of blood is drawn and sent to the lab for troponin level analysis. If a sample came back above a reference value, additional further tests were administered. The problem with the current system is with the laboratory turnaround time. Currently in the developed world, clinical and laboratory turnaround times in troponin T testing to be about 122 minutes from admittance to diagnostic of a heart attack. This includes drawing the sample, transport to the laboratory, prepping the sample for testing, and the actual tests which themselves take over an hour to complete.

The illustrated rapid biosensor performs a diagnostic test, where instead of a lengthy process during which the heart continues to be damaged during the entirety of the laboratory process, a sample is taken and in 10 minutes doctors would know to start treatment. The sample can be drawn in an ambulance, and the SAW testing occurs during the transport to the hospital. Patients are unloaded from an ambulance with a laboratory diagnosis of their troponin levels to indicate whether immediate treatment for heart failure should be administered. Such an embodiment shows the power of fast, portable biosensing. No longer is the device limited to the regime of preventative medicine or diagnostics, but can also be used as a life saving emergency device.

The main property of a SAW sensor is that it attenuates or shifts the phase of a waveform. There are variables that determine this phase shift, such as the material, lane length, but one dependent variable is mass. Any loading on the waveguide layer, through pressure changes associated with mass, causes a distinct phase shift in a wave that traverses the medium. In fact, many of the commercial telecommunications SAW filter properties are generated by depositing varying layers of thin films to weigh down the waveguide layer to attenuate the signal based on the application needs.

The illustrated SAW sensor has adequate shielding such that it can be used not only in open air, but in fluids without shorting or crosstalk across the liquid medium. A SAW surface, functionalized with an antibody layer, traps any target analytes in a fluid sample. As the antibody sites fill up, the addition of mass onto the SAW results in a detectible phase shift. This leads to some further probing SAW's as a potentially new field of biosensing. Early results, although promising, required concentrations of antigens much higher than of any practical usage. Two problems exist with other attempts to successfully utilize the SAW as a biosensor. Initially, the trials lacked any form of amplification, or the addition of mass to a target analyte such that it can be more readily detected. Even the most precise of SAW sensors have an intrinsic limit of detection, or minimum mass required, that arises from the target frequency used. Too low of a frequency would result in a massive limit of detection and an unusable result. Too high of a frequency causes the vibrations to bleed into the other sensing lanes causing interference, as the walls that separate each channel become invisible to the high energy waveforms. The addition of a mass amplification step resolves the issue of a limit of detection, but requires additional biology in the detection step in the form of mass amplifiers, as well as a complex microfluidic apparatus that can deliver said mass amplifiers without returning any false positives.

Isothermal DNA Detection

Polymerase chain reaction (PCR) is one of the two most commonly performed biochemical laboratory procedures in the modern arsenal of diagnostic medicine. Through the repeated thermal cycling of a DNA strand in question, DNA melting separates the double helix strands and isolates segments of a known codex, and enzymes rapidly replicate the extracted segment. Through this isolation and amplification, millions of copies of a single strand of DNA are created which can easily be more readily counted than just the initial concentration. The application for multiplying DNA strands for counting are for screening for genetic biomarkers. For example, if a patient wanted to be tested to see if they were a genetic carrier of a disease, particularly leukemias and lymphomas, a PCR kit that isolates the DNA segment that is responsible for the cancerous mutations is employed. A sample of blood containing the patient's DNA is tested, and after administering PCR, the resulting sample would either return no strands of the target DNA, or billions of them. The presence of the replicated DNA indicates to a physician that the patient was a carrier of the mutagenic gene. PCR has dramatically altered medicine.

Being a staple of modern DNA detection, there have been several challenges in miniaturizing the process to lower the barrier of needing specialized technically trained labor to test for the presence of a sequence specific DNA segment. The repeated thermal cycling requires heating the sample to 95°C, then lowering it to 55°C anywhere from 25-30 times. For an optimized, room scale thermocycler, each cycle can be completed in about two minutes, resulting in a little over an hour per test. Additionally, a trained technician must place the resulting sample into a gel electrophoresis machine and allow for the strands to separate and compare it against the target DNA. The fact that the sample preparation occurs separately from the testing poses additional challenges in automating the process while keeping cost of testing down.

One such application is the use of the SAW platform to conduct sequence specific DNA strand detection similarly to PCR by using an orthogonal set of CRISPR associated protein 9, (Cas9 RNA), which is an RNA-guided DNA endonuclease enzyme associated with the CRISPR (Clustered Regularly Interspaced Short Palindromic Repeats). Cas9 RNA proteins bind a gene of interest. The first nucleotide segment is bound to the sensor surface, and the corresponding last nucleotide segment is bound to a mass amplifier. Much like how a target protein acts as the linker between two antibodies to induce a mass loading on the sensor, the two engineered Cas9 proteins are capable of inducing mass loading on the sensor in the presence of a target strand of DNA.

Unlike testing for a virus, a concentration is not needed, only a binary yes/no to indicate whether the patient carries the target gene of interest. Being able to rapidly deploy a test to screen for oncogenic amplifiers allows for cancer screening tests to become as common as taking one's blood pressure. The ability to rapidly screen for known DNA disease indicators makes modern cancer treatment orders of magnitude more effective, as almost every study shows that improving early detection reduces fatality rates and the burden of cancer. The allotted time allows for precancerous growths and early cancers at almost any part of the body to be removed via medical intervention.

The ability for the SAW platform to readily change between an analyte concentration reader and a specific DNA strand detector shows the adaptability of the platform. Much like how the last twenty years has seen a unilateral adoption of ELISA and PCR at the academic and industrial level, the SAW platform is versatile enough that it can be adapted to a specific need and react accordingly as the need arises. Thus, what is realized by the illustrated embodiments is an entirely new class of analytical chemistry tools.

Additionally, when designing the cartridge, the cost needed to be minimized while still containing all the necessary sensors and drivers that a SAW test necessitates. The cartridge needs to include an electrically driven syringe pump, radio frequency lines for communicating with the SAW sensor, temperature sensors, and an optical channel for fluidic transport inspection. All of these peripherals were integrated into a flexible circuit board that is designed to sit underneath the cartridge and link all of the electronic components with the reader. The cost of a single cartridge, including the cost of the injection molding and all electronics, is stringently kept under two US dollars (2018 dollars), to keep in line with our promise for cheap, accessible medical diagnostics.

Filtration and Separation

In addition to being a mass detector, the SAW also registers changes in viscosity of a fluid as a phase shift. Because the device is unable to differentiate between phase shift associated to mass conjugation and viscosity increases, and to additionally reduce any interference in the conjugation of the analyte to the sensor, the microfluidic circuit must include a way to filter the whole blood cells found in a traditional complex assay from the target analyte and the plasma serum that will carry it to the detector. While the viscosity of whole blood serum is high, the viscosity of plasma is much closer to that of water, for which the chip does not see the effects of viscosity due to the 325 MHz RF signal.

To be able to use a membrane-based blood separation filter, the fluidic positive pressure is much greater than can be exerted by a piezo pump. As a result, the filter creates the need to utilize a syringe pump mechanism for fluid transfer which his capable of generating much greater pressures.

The double membrane filtration mechanism allows for a greater surface area of filtration membrane without resulting in an increase in diameter of the fluidic pathway, resulting in a reduced propensity for the filter to clog and create a backpressure that halts or retards fluid motion. The smallest filtration pores should not be too small so as to impede the passage of magnetic beads, or even to interfere with the surface chemistry of attaching the beads to the target analyte through any interactions.

Magnetic Conjugation

To overcome the inherent challenges associated with diffusion, the use of magnetic nanoparticles allows for site directed manipulation of the suspended half-immunoassay magnetic nanoparticles. By utilizing magnetism, the diffusion timescale, which when left to its own accord could take hours to enable a suspended particle to diffuse to the surface, instead this application uses magnetic forces to instantaneously draw the magnetic nanoparticle to the sensor surface.

The challenge associated with using an electromagnet is the drawing of power from the device and the local increase in temperature. By using a rare earth magnet, such as a NdFeB magnet, allows for magnetic field strengths of 0.5 Tesla, for example, at a large magnetic field to size ratio. To prevent accumulation of the magnetic nanobeads along the magnetic field lines, a magnet surface area greater than the SAW is chosen to allow for a uniform gradient of magnetic field strength at the surface of the SAW sensor footprint.

In addition, a magnetic field allows for a greater degree of rotation of a magnetic nanoparticle, as they rotate to align with the magnetic field lines. This rotation results in an increased propensity to conjugate as the rotation of the nanoparticles increases the chance of an analyte and sensor antibody to find each other in the right orientation and make an immunoassay binding.

When solving for the force acting on a magnetic nanoparticle, the equation for a square permanent magnet based on the Br Remanence of the magnet (residual magnetism), L length of the block, W width of the block, and D thickness of the block, and Z the distance between the magnetic nanoparticle and the pole face of the magnet is as follows: From this equation, we can quantify the dimensions necessary for a magnet to be able to pull magnetic nanoparticles onto the surface at a particular distance, as well as the distance required when removing the magnet from the sensing chamber so that the magnetic field strength falls off to the remnant background magnetic field strength. By using simple Taylor expansion, the first term in the expansion is proportional to , which indicates a rapid decay in field strength with distance. Given the thickness of the SAW sensor as the closest distance the magnet can approach the fluid, and a magnetic strength of, for example, 0.5 Tesla to attract magnetic nanoparticles, by displacing the magnet roughly 1 cm away from the SAW surface, the magnetic field strength decays to of its maximum field strength, resulting in the suspended magnetic beads field of approximately 50 Gauss, which is below the minimum threshold for the magnet to act upon the nanoparticle.

A SAW System Overview technical

General and overall design considerations having now been set forth above as first illustrated in the incorporated applications, U.S. Provisional Application serial no. 62597202, and U.S. Patent Application serial no. 15/597,090, to which priority is claimed, turn now to a fully engineered SAW embodiment. Details disclosed in the incorporated applications will not be repeated, but improvements and concepts included in the present embodiment will be described below.
Fig. 110 is a high-level block diagram of the illustrated SAW system, generally denoted by reference numeral 1000. Details of the circuitry and modules of Fig. 110 are shown in Fig. 120, but will not be further discussed here, and can be found described in detail in the incorporated applications.
Fig. 130 is a timing diagram showing the necessary steps and order required for a measurement to be taken by the SAW microfluidic cartridge. After the sample is injected, the mixing/capture/conjugation step 2200 occurs in the first reservoir of the device. The sample is pumped during time period 3400 through the microfluidic circuit in the separation step 2400, where the fluid is filtered and the whole blood is separated from the target analyte. The fluid is transferred to the sensing chamber where the detection step 2800 and clean up step 3000 occur in sequence to allow for the analyte to conjugate to the SAW, allow for nonspecifically bound amplifiers to be removed, and to allow for a measurement to be taken.
Fig. 140 is a block diagram of the cartridge embodiments. A sample is introduced through the septum 2200 to the syringe reservoir 5800. The fluid is transferred to the pump reservoir 4700, where a syringe pump 4600 drives the fluid to the mixing reservoir 6000, where a piezo mixer 2000 homogenizes the fluid. The positive pressure from the syringe pump drives the blood sample through a membrane 4800, which separates the plasma and analyte which passes to the separation reservoir 6100, leaving behind the whole blood cells in the mixing reservoir 6000. The analyte and filtered plasma are deposited into the sensing chamber 1400, which contains the SAW 1600, and to conjugate to the surface (See Fig. 210). After the conjugation has occurred, the remaining fluid is transferred to the waste reservoir 2380.
Fig. 150 is a perspective view of the disposable cartridge 1200. Visible from the outside is the septum 5700 where sample is injected, the syringe pump 4600 head, and the SAW sensor 1600.
Fig. 160 is an isometric of the disposable cartridge 1200. The septum 5700 of Fig. 150 is attached above the syringe reservoir 5800, which comprises the sample input port 5600. The fluid is transferred to the piston reservoir 4700, where a piston pump 4600 is compressed and forces the fluid through the microfluidic circuit. The fluid flows to a separation reservoir 4900 from which the fluid flows through a filter membrane 4800 that separates the whole blood from the sample, only allowing analyte and plasma to proceed. The fluid then flows to the sensing chamber 1400, where it contacts the SAW sensor 1600. Finally, the fluid flows from the sensing chamber to a waste reservoir 2380.
Fig. 170 is a crosssectional isometric view of the sample input port 5600 and syringe pump reservoir 4700. Illustrated is the mechanism by which the septum 5700 is attached to the syringe reservoir 5800 and the fluid pathway that the sample takes to reach the pump reservoir 4700. A piston pump 4600 compresses the fluid in the reservoir 4700 and creates the necessary positive pressure in the fluid to drive the sample into mixing reservoir 6000 and through a filtration membrane 4800 into separation reservoir 6100 to remove the blood cells from the sample and reduce any associated viscous effects they might have on the measurement taken by the SAW.
Fig. 180 shows a detailed view of the sensing chamber 1400. The fluid enters from the filtration chamber or separation reservoir 6100 to the sensing chamber 1400 where the analyte is brought in contact with the SAW sensor 1600. Orthogonal to the SAW sensor 1600 underneath is an electromagnet 5400 that is used to remove any nonspecifically bound magnetic nanoparticles from the surface of the SAW 1600 to reduce the propensity of the device to make false positive measurements.
Fig. 190 shows an isometric cross section of the entire microfluidic circuit 1300. Fig. 190 shows how the sample input port 5600, piston reservoir 4700, separation chamber 6100, sensing chamber 1400, and waste reservoir 2380 are connected to one another.
Fig. 200 is a graph of the phase shifted output of the SAW sensor 1600 and a calculated phase shift $\Delta\varphi$ in degrees as a function of acquisition time of a SAW sensor reading. The graph shows data from Ebola collected by the active channel 6300 and reference lane 6400 for test viral antigen with a concentration of 1,000,000 PFU/mL. The Specific Ebola signal 65 (calculated by subtracting the non-specific IgG signal from the Total Ebola signal) is also shown. Sample acquisition occurs at time 0, and several seconds are required for the signal to stabilize. (Sensors 2015, 15, 8605-8614; doi:10.3390/sl50408605, Rapid Detection of Ebola Virus with a Reagent-Free, Point-of-Care Biosensor, Baca et all.)

Fig. 210 is an illustrated embodiment of the two main biochemical interactions that occur in the cartridge 1200. In the mixing chamber 60, functionalized magnetic particles 2110 are combined with target analyte 2090 and homogenized such that the chance of forming an analyte-magnetic bead half sandwich 2270 is vastly increased. Once conjugated, the sample flows to the saw sensor 16, which is functionalized with functionalized antibodies 2350 on its surface. The analyte-magnetic bead half sandwich is brought in contact with the SAW sensor due to the presence of a magnetic field which draws them to the surface, where they form an immunoassay sandwich 2370 consisting of the SAW sensor 1600, one capture antibody, the analyte in question, an orthogonal capture antibody, and a magnetic mass enhancing nanoparticle.

Fig. 220 is an illustration of the double membrane filter 2430 in the filtration chamber 4700. The sample containing whole red blood cells 2460, whole white blood cells 2470, and analyte-magnetic bead half immunoassay 2270 flow into the chamber, where two membranes of varying thickness, one with larger pore size 2440 and one with more refined pore size 2450 filter out the whole cells 2460 and white cells 2470 from the fluid while allowing the analyte-magnetic bead half sandwiches 2270 to pass through.

Fig. 230 is an orthographic cross section detail of the syringe pump chamber 2080 incorporated into the cartridge assembly 1200. A motor 2010 drives a gear 2030 via a drive shaft 2020 that drives a worm gear 2040 attached to the syringe plunger head 2070 which is coupled via a coupler 2050. As the plunger is driven down via the worm screw motion, the blood 2100 sample containing the target analyte 2090, as well as the buffer 2120 and the magnetic beads 2110 are driven from the syringe pump chamber through a microfluidic exit 2130 to the next chamber. The syringe pump mechanism generates the necessary positive pressure to drive the fluid through the microfluidic circuit and to the SAW

Fig. 240 is an orthographic cross section of the mixing chamber 2250 incorporated into the cartridge assembly 1200. A motor 2010 drives a gear 2210 via a drive shaft 2200 that drives a mixing gear 2220 which drives a mixing shaft 2230. The shaft passes through a shaft seal 2240 and drives a mixing blade 2260 that mixes the incoming analyte 2090 and magnetic beads Yeh and forms an analyte-magnetic bead conjugate 2270. The mixing chamber allows for the first half of the immunoassay sandwich (Magnetic nanoparticle - analyte) to be formed.

Fig 250. is an illustration of the sensing chamber 2360 incorporated into the cartridge assembly 1200. A motor 2010 drives a gear 2310 via a drive shaft 2300 that drives a worm gear 2320 attached to the permanent magnet 2330 that allows the magnet to travel freely up and down. The magnet approaches the SAW sensor 2340, which pulls analyte - magnetic bead conjugates 2370 onto the surface of the SAW 2340 where they bind to the functionalized antibodies 2350 on the surface that allow for a differential phase measurement to be taken.

Fig. 260 is an orthographic cross section of the microfluidic circuit 1200. A motor 2010 drives three microfluidic components, the syringe pump 2080, the mixer 2250 and the sensor magnet 2330. A sample 2100 is introduced at the syringe pump and is mixed with a buffer 2120, where it is transferred through the circuit 2130 to the mixing chamber where a mixing blade 2260 allows for the analyte 2090 and the magnetic beads 2110 to conjugate and form a half immunoassay sandwich 2270. The half sandwich is sent to the sensing chamber, where functionalized antibodies 2350 on the surface of the saw 2340 capture the half sandwich and form an immunoassay sandwich 2370. The magnet 2330 is raised and lowered to increase or decrease the rate of diffusion and conjugation rate. After that the fluid is transferred to a waste reservoir 2380.

Fig. 270a illustrates the embodiments of the sensing chamber with the permanent magnet 2330 raised. Fluid containing both analyte-magnetic bead conjugates 2270 and unbound magnetic beads 2110 flow into the sensing chamber. After the chamber is full, the fluid flow halts. During the conjugation process at time t = 0, the separation distance of the magnet 2420 from the fluid is great enough that the magnetic particles do not feel the presence of the magnetic field 2430.

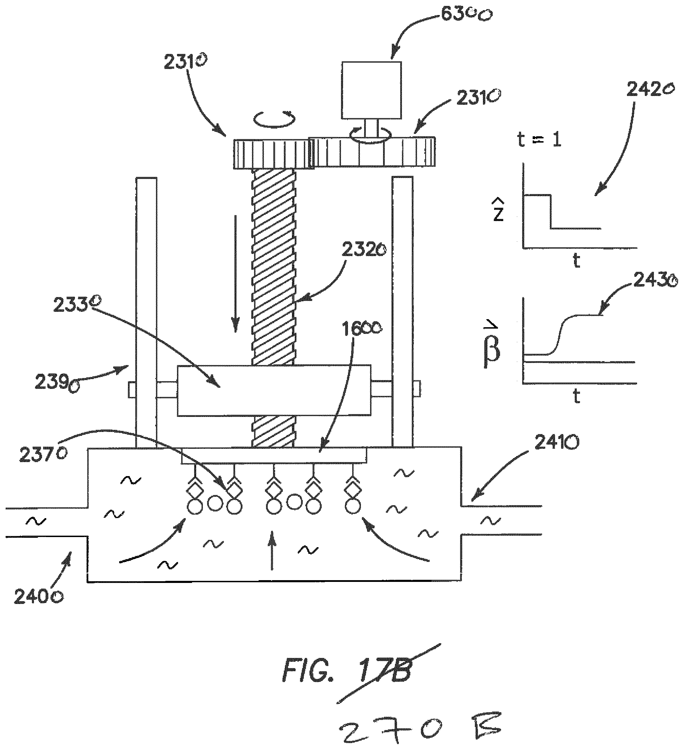

Fig. 270b illustrates the embodiment of the sensing chamber with the permanent magnet 2330 lowered over the SAW 1600. A motor 6300 drives a gear set 2310 that spins the worm gear 2320 and drives the permanent magnet 2330 closer to the sensor surface. The magnet 2330 is attached by guiding rails 2390 that prevent the magnet from freely rotating, but allow for unimpeded motion in the z direction indicated by the arrow in Fig. 270b. As the magnet is brought lower as depicted by the line 2420 in the upper insert graph of Fig. 270b, the magnetic field strength 2430 increases on the fluid volume, driving the magnetic beads to the SAW surface, where they can conjugate to the functionalized antibodies on the surface, creating an immunoassay sandwich 2370 that the sensor can detect.

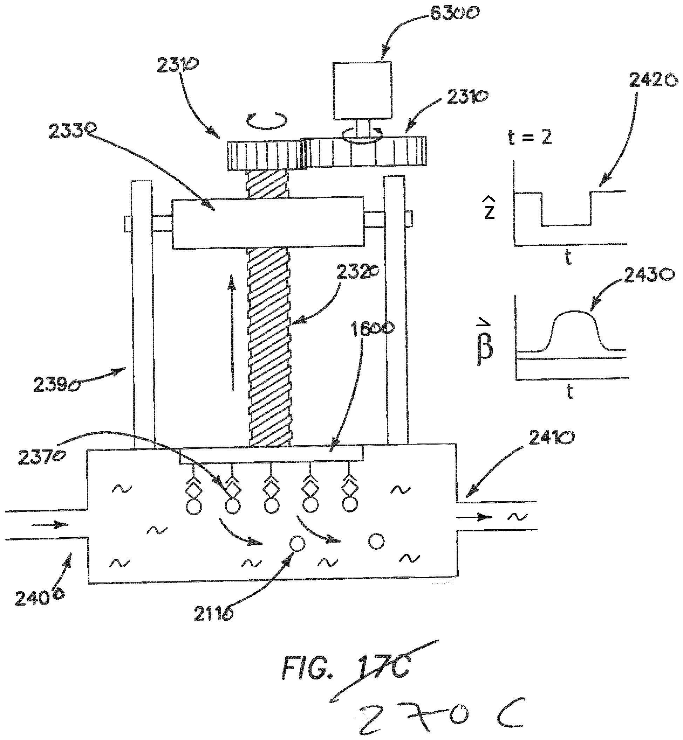

Fig. 270c illustrates the embodiment of the sensing chamber with the permanent magnet 2330 returned to its position of minimum field strength. Once the magnet is raised, any nonspecifically bound magnetic beads 2410 are no longer magnetically attached to the surface, while the immunoassays are electrochemically bound to the sensor surface. As the fluid is pushed out of the sensing chamber, any nonspecifically bound magnetic particles are removed from the sensor surface, and the process is repeated as new fluid is introduced at the sample input port 2400. This process is repeated 10 times.

Using this cartridge and methodology it has been demonstrated that detection in human cardiac troponin ternary complex of subunit I using a SAW sensor and nanoparticle-based immunoassay with 10-nm gold nanoparticles is able to return clinically-relevant results in 10 minutes, which is approximately 5 times faster than laboratory techniques. This will enable fast administration of life-saving treatments.

The illustrated cartridge and methodologies have demonstrated that rapid multiplexed immunoassay for the detection of prevalent HIV-1 & HIV-2 antigens is also possible. This again allows early-detection and produces clinically relevant results for a total cost of about $5 per test which is 10 times cheaper than a gp24 HIV-1 PCR test conducted at a lab in India. Moreover, current PCR tests are unable to distinguish between HIV-1 and HIV-2, which is possible with the illustrated embodiment.

The computer-controlled cellphone or smart device has become a fundamental part of the human experience in the 21st century. A global citizen is more likely to use a smartphone than a computer or a car. The illustrated embodiment has been developed to operate in tandem with a smart device through the use of an application available to iPhone and Android devices in order to keep the cost per test down by not having to implement screens, Wi-Fi receivers, and many other peripherals found in everyday smart devices. Thus, system 10 is provided with a smart device connector 50 among its user interface options to allow direct wire, Wi-Fi or blue tooth connection thereto. In this manner the measurements of system 10 can automatically be communicated to the cloud or other network for further analysis and utilization.

Conclusion

It may now be appreciated that the illustrated embodiments of the invention include an apparatus for performing a portable, fast, field assay of a small sample of a biological analyte having a microfluidic cartridge used with a smart device. The apparatus includes a functionalized shear horizontal surface acoustic wave (SAW) detector having a plurality of channels including at least one functionalized sensing lane and including at least one reference lane, and a closed microfluidic circuit fluidicly communicated with the shear horizontal surface acoustic wave (SAW) detector, the closed microfluidic circuit for mixing and recirculating the analyte with a buffer with functionalized magnetic beads included within the microfluidic circuit through the sensing and reference lanes of the shear horizontal surface acoustic wave (SAW) detector. It is to be understood that other types of detectors now known or later developed which have the needed limit of detection and field usability may be substituted for a SAW detector.

The closed microfluidic circuit includes a syringe reservoir for receiving the sample of biological analyte to be tested. A pump reservoir with a syringe pump is fluidicly communicated with the syringe reservoir for drawing the sample from the syringe reservoir into a buffer in the pump reservoir. The syringe pump pressurizes the sample of biological analyte and the buffer for recirculation through closed microfluidic circuit.

A mixing reservoir is fluidicly communicated with the pump reservoir. The mixing reservoir includes an active mixer, a predetermined capture antibody and functionalized magnetic beads for mass amplification, the buffer, the predetermined capture antibody and functionalized magnetic beads are mixed into a homogenized mixture wherein an analyte-magnetic bead half sandwich is formed.

A separation reservoir is fluidicly communicated with the mixing reservoir. The separation reservoir includes a membrane for filtering out cellular constituents from the homogenized mixture.

A sensing chamber is fluidicly communicated with the separation reservoir. The sensing chamber includes the shear horizontal surface acoustic wave (SAW) detector and a magnetic source, the analyte-magnetic bead half sandwich being driven by the magnetic source into contact with the functionalized sensing lane of the shear horizontal surface acoustic wave (SAW) detector to form an immunoassay sandwich including the functionalized shear horizontal surface acoustic wave (SAW) detector, an orthogonal capture antibody and the analyte-magnetic bead half sandwich bound to the orthogonal capture antibody.

The apparatus may further include a SAW interface circuit coupled to the shear horizontal surface acoustic wave (SAW) detector, a microcontroller coupled to the SAW interface circuit for controlling the SAW detector through the SAW interface circuit and for data processing an output assay signal from the SAW detector, and a user interface communicated with the microcontroller for providing user input and for providing user output through the smart device.

The magnetic source in one embodiment may be a first electromagnet for separating the captured magnetic beads combined with the analyte from uncaptured magnetic beads not combined with the analyte, a second electromagnet for disposing the captured magnetic beads on at least one functionalized sensing lane of the shear horizontal surface acoustic wave (SAW) detector to allow conjugation of the functionalized captured magnetic beads with the at least one functionalized sensing lane, and a third electromagnet for removing uncaptured magnetic beads and other noninteracting components of the analyte or buffer from the at least one functionalized sensing lane to allow a final measurement to be made.

In another embodiment the magnetic source is a permanent magnetic movable with respect to the at least one functionalized sensing lane of the functionalized shear horizontal surface acoustic wave (SAW) detector.

The membrane is a double membrane through which the homogenized mixture of buffer and analyte-magnetic bead half sandwich is transferred, but which filters out cellular components of the sample.

The apparatus may further include a bubble trap.

The syringe pump and active mixer may be a piezo-pump and piezo-mixer.

The closed microfluidic circuit fluidically for mixing and recirculating the analyte with a buffer with functionalized magnetic beads recirculates the homogenized mixture of buffer, uncaptured analyte, functionalized magnetic beads, and analyte-magnetic bead half sandwiches through the closed microfluidic circuit a multiplicity of times within a predetermined time period less than one hour in duration.

More specifically the closed microfluidic circuit for mixing and recirculating recirculates the homogenized mixture of buffer, uncaptured analyte, functionalized magnetic beads, and analyte-magnetic bead half sandwiches through the closed microfluidic circuit at least 50 times within less than or equal to a 10-minute duration.

The analyte and buffer are typically combined in the microfluidic chamber using a sample size of the order of 50 μL, namely 40 - 60 μL, in an amount of buffer of the order of 100 μL, namely 50 - 150 μL.

The apparatus may further include peripherals coupled to the microcontroller including a memory, a temperature and humidity module, a real time clock, a cooling fan, and an in-circuit serial programming ICSP module.

The user interface includes a Wi-Fi module and antenna coupled to the Wi-Fi module, a capacitive touch screen, a color thin-film transistor display and a graphic controller with memory coupled to the thin-film transistor display with a backlight source.

The user interface may also include an audio module with a speaker coupled thereto, a serial data card interface, an inertial motion unit, at least one RGB LED, and at least one program switch.

The SAW interface circuit includes a clock oscillator, an RF synthesizer coupled to the clock oscillator, a low pass filter and splitter having an input coupled to the RF synthesizer and an output coupled to the SAW detector, a phase/gain detector coupled to the low pass filter and splitter and having a data input coupled to the SAW detector, an analog-to-digital converter having an input coupled to an output of the phase/gain detector and having an output coupled to the microcontroller, a pump driver, and a motor with a motor driver for mechanically loading the microfluidic cartridge.

More specifically the illustrated embodiments of the invention include a cartridge combinable with a smart device which is capable of communicating with a network, the cartridge for performing a portable, fast, field assay of an analyte in a biological sample. The cartridge has a closed microfluidic circuit and a detector. The closed microfluidic circuit homogenously mixes the analyte with a buffer, a predetermined antibody and functionalized magnetic beads capable of being specifically combined with the analyte into a analyte-magnetic bead half sandwich, filters the analyte, buffer, predetermined antibody and functionalized magnetic beads, and analyte combined into a analyte-magnetic bead half sandwich from other constituents of the sample, and recirculates the analyte, buffer, predetermined antibody and functionalized magnetic beads, and analyte combined into a analyte-magnetic bead half sandwich through the microfluidic circuit under pressure a predetermined number of times within a predetermined time period. The detector is fluidly communicated with the microfluidic circuit in which the analyte is combined with the analyte-magnetic bead half sandwich and is driven toward the detector by a magnetic source, where an immunoassay sandwich is formed in or on the detector and sensed by the detector.

The cartridge may further include a microcontroller coupled to detector for controlling the detector and for data processing an output assay signal from the detector; and a user interface communicated with the microcontroller for providing user input and for providing user output through the smart device to the network.

Still further the illustrated embodiments of the invention encompass a method of operating a medically diagnostic cartridge used with a smart device capable of communicating with a network. The medically diagnostic cartridge performs a portable, fast, field assay of an analyte in a sample. The method includes the steps of mixing the analyte, functionalized magnetic beads, and buffer into a homogenous mixture, wherein at least some of the functionalized magnetic beads capture the analyte to form an analyte-magnetic bead half sandwich, transferring the analyte, buffer and functionalized magnetic beads toward a detector, selectively disposing the captured magnetic beads into the detector to allow conjugation of the analyte-magnetic bead half sandwich with a functionalized portion of the detector to form an immunoassay sandwich, and detecting the presence and/or amount of immunoassay sandwich formed in or on the detector to generate a diagnostic output.

The method may further include the step of recirculating the homogenized mixture a predetermined number of times through the cartridge in a predetermined time period and repeating the steps of mixing the analyte, functionalized magnetic beads, and buffer into a homogenous mixture, wherein at least some of the functionalized magnetic beads capture the analyte to form an analyte-magnetic bead half sandwich, transferring the analyte, buffer and functionalized magnetic beads toward a detector, selectively disposing the captured magnetic beads into the detector to allow conjugation of the analyte-magnetic bead half sandwich with a functionalized portion of the detector to form an immunoassay sandwich, and detecting the presence and/or amount of immunoassay sandwich formed in or on the detector to generate a diagnostic output.

The method may further include the step of removing uncaptured magnetic beads and other noninteracting components of the analyte or buffer from the mixture detector before detecting the presence and/or amount of immunoassay sandwich formed in or on the detector to generate a diagnostic output.

The method may further include the step of removing nonspecifically bound mass amplifiers from the homogenous mixture and/or detector to reduce generation of false positive diagnostic output.

Many alterations and modifications may be made by those having ordinary skill in the art without departing from the spirit and scope of the embodiments. Therefore, it must be understood that the illustrated embodiment has been set forth only for the purposes of example and that it should not be taken as limiting the embodiments as defined by the following embodiments and its various embodiments.

Therefore, it must be understood that the illustrated embodiment has been set forth only for the purposes of example and that it should not be taken as limiting the embodiments as defined by the following claims. For example, notwithstanding the fact that the elements of a claim are set forth below in a certain combination, it must be expressly understood that the embodiments include other combinations of fewer, more or different elements, which are disclosed in above even when not initially claimed in such combinations. A teaching that two elements are combined in a claimed combination is further to be understood as also allowing for a claimed combination in which the two elements are not combined with each other but may be used alone or combined in other combinations. The excision of any disclosed element of the embodiments is explicitly contemplated as within the scope of the embodiments.

The words used in this specification to describe the various embodiments are to be understood not only in the sense of their commonly defined meanings, but to include by special definition in this specification structure, material or acts beyond the scope of the commonly defined meanings. Thus, if an element can be understood in the context of this specification as including more than one meaning, then its use in a claim must be understood as being generic to all possible meanings supported by the specification and by the word itself.

The definitions of the words or elements of the following claims are, therefore, defined in this specification to include not only the combination of elements which are literally set forth, but all equivalent structure, material or acts for performing substantially the same function in substantially the same way to obtain substantially the same result. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a subcombination or variation of a subcombination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptionally equivalent, what can be obviously substituted and also what essentially incorporates the essential idea of the embodiments.

**Claims**

1. An apparatus for performing a portable, fast, field assay of a sample of a biological analyte having a microfluidic cartridge used with a smart device comprising:

   a functionalized shear horizontal surface acoustic wave (SAW) detector having a plurality of channels including at least one functionalized sensing lane and including at least one reference lane;
   a closed microfluidic circuit fluidicly communicated with the shear horizontal surface acoustic wave (SAW) detector, the closed microfluidic circuit for mixing and recirculating the analyte with a buffer with functionalized magnetic beads included within the microfluidic circuit through the sensing and reference lanes of the shear horizontal surface acoustic wave (SAW) detector, the closed microfluidic circuit comprising:;

      a syringe reservoir for receiving the sample to be tested;
      a pump reservoir with a syringe pump fluidicly communicated with the syringe reservoir for drawing the sample biological analyte from the syringe reservoir into a buffer in the pump reservoir, the syringe pump pressurizing the sample of biological analyte and the buffer for recirculation through closed microfluidic circuit;
      a mixing reservoir fluidicly communicated with the pump reservoir, the mixing reservoir including an active mixer, a predetermined capture antibody and functionalized magnetic beads for mass amplification, the buffer, the predetermined capture antibody and functionalized magnetic beads being mixed into a homogenized mixture wherein an analyte-magnetic bead half sandwich is formed;

a separation reservoir fluidicly communicated with the mixing reservoir, the separation reservoir include a membrane for filtering out cellular constituents from the homogenized mixture; and

a sensing chamber fluidicly communicated with the separation reservoir, the sensing chamber including the shear horizontal surface acoustic wave (SAW) detector and a magnetic source, the analyte-magnetic bead half sandwich being driven by the magnetic source into contact with the functionalized sensing lane of the shear horizontal surface acoustic wave (SAW) detector to form an immunoassay sandwich including the functionalized shear horizontal surface acoustic wave (SAW) detector, an orthogonal capture antibody and the analyte-magnetic bead half sandwich bound to the orthogonal capture antibody.

2. The apparatus of claim 1 further comprising:

a SAW interface circuit coupled to the shear horizontal surface acoustic wave (SAW) detector;

a microcontroller coupled to the SAW interface circuit for controlling the SAW detector through the SAW interface circuit and for data processing an output assay signal from the SAW detector; and

a user interface communicated with the microcontroller for providing user input and for providing user output through the smart device.

3. The apparatus of claim 1 or 2 where the magnetic source comprises:

a first electromagnet for separating the captured magnetic beads combined with the analyte from uncaptured magnetic beads not combined with the analyte;

a second electromagnet for disposing the captured magnetic beads on at least one functionalized sensing lane of the shear horizontal surface acoustic wave (SAW) detector to allow conjugation of the functionalized captured magnetic beads with the at least one functionalized sensing lane; and

a third electromagnet for removing uncaptured magnetic beads and other noninteracting components of the analyte or buffer from the at least one functionalized sensing lane to allow a final measurement to be made.

4. The apparatus of any of the preceding claims where the magnetic source comprises a permanent magnetic movable with respect to the at least one functionalized sensing lane of the functionalized shear horizontal surface acoustic wave (SAW) detector.

5. The apparatus of any of the preceding claims where the membrane comprises a double membrane through which the homogenized mixture of buffer and analyte-magnetic bead half sandwich is transferred, but which filters out cellular components of the sample.

6. The apparatus of any of the preceding claims further comprising a bubble trap, and/or where the syringe pump and active mixer comprises a piezo-pump and piezo-mixer.

7. The apparatus of any of the preceding claims where the closed microfluidic circuit fluidicly for mixing and recirculating the analyte with a buffer with functionalized magnetic beads recirculates the homogenized mixture of buffer, uncaptured analyte, functionalized magnetic beads, and analyte-magnetic bead half sandwiches through the closed microfluidic circuit a multiplicity of times within a predetermined time period less than one hour in duration, preferably where the closed microfluidic circuit for mixing and recirculating recirculates the homogenized mixture of buffer, uncaptured analyte, functionalized magnetic beads, and analyte-magnetic bead half sandwiches through the closed microfluidic circuit at least 50 times within less than or equal to a 10-minute duration.

8. The apparatus of any of the preceding claims where the analyte and buffer are combined in the microfluidic chamber using a sample size of the order of 50 μL in an amount of buffer of the order of 100 μL.

9. The apparatus of any of the preceding claims 2-8 with one or more of the following:

further comprising peripherals coupled to the microcontroller including a memory, a temperature and humidity module, a real time clock, a cooling fan, and an in-circuit serial programming ICSP module;

where the user interface comprises a Wi-Fi module and antenna coupled to the Wi-Fi module, a capacitive touch screen, a color thin-film transistor display and a graphic controller with memory coupled to the thin-film transistor display with a backlight source, preferably where the user interface comprises an audio module with a speaker coupled thereto, a serial data card interface, an inertial motion unit, at least one RGB LED, and at least one program switch;

where the SAW interface circuit comprises a clock oscillator, an RF synthesizer coupled to the clock oscillator, a low pass filter and splitter having an input coupled to the RF synthesizer and an output coupled to the SAW detector, a phase/gain detector coupled to the low pass filter and splitter and having a data input coupled to the SAW detector, an analog-to-digital converter having an input coupled to an output of the phase/gain detector and having an output coupled to the microcontroller, a pump driver, and a motor with a motor driver for mechanically loading the microfluidic cartridge.

10. A cartridge combinable with a smart device which is capable of communicating with a network, the cartridge for performing a portable, fast, field assay of an analyte in a biological sample comprising:

a closed microfluidic circuit which homogenously mixes the analyte with a buffer, a predetermined antibody and functionalized magnetic beads capable of being specifically combined with the analyte into a analyte-magnetic bead half sandwich, which filters the analyte, buffer, predetermined antibody and functionalized magnetic beads, and analyte combined into a analyte-magnetic bead half sandwich from other constituents of the sample, and which recirculates the analyte, buffer, predetermined antibody and functionalized magnetic beads, and analyte combined into a analyte-magnetic bead half sandwich through the microfluidic circuit under pressure a predetermined number of times within a predetermined time period; and

a detector fluidly communicated with the microfluidic circuit in which the analyte is combined with the analyte-magnetic bead half sandwich and is driven toward the detector by a magnetic source, where an immunoassay sandwich is formed in or on the detector and sensed by the detector.

11. The cartridge of claim 10 further comprising a microcontroller coupled to detector for controlling the detector and for data processing an output assay signal from the detector; and

a user interface communicated with the microcontroller for providing user input and for providing user output through the smart device to the network, preferably

where the closed microfluidic circuit comprises:

a syringe reservoir for receiving the sample to be tested;

a pump reservoir with a syringe pump fluidicly communicated with the syringe reservoir for drawing the sample from the syringe reservoir into a buffer in the pump reservoir, the syringe pump pressurizing the sample and the buffer for recirculation through closed microfluidic circuit;

a mixing reservoir fluidicly communicated with the pump reservoir, the mixing reservoir including an active mixer, a predetermined capture antibody and functionalized magnetic beads for mass amplification, the buffer, the predetermined capture antibody and functionalized magnetic beads being mixed into a homogenized mixture wherein an analyte-magnetic bead half sandwich is formed;

a separation reservoir fluidicly communicated with the mixing reservoir, the separation reservoir include a membrane for filtering out cellular constituents from the homogenized mixture; and

a sensing chamber fluidicly communicated with the separation reservoir, the sensing chamber including the detector, which comprises a shear horizontal surface acoustic wave (SAW) detector and a magnetic source, the analyte-magnetic bead half sandwich being driven by the magnetic source into contact with the functionalized sensing lane of the shear horizontal surface acoustic wave (SAW) detector to form an immunoassay sandwich including the functionalized shear horizontal surface acoustic wave (SAW) detector, an orthogonal capture antibody and the analyte-magnetic bead half sandwich bound to the orthogonal capture antibody.

12. The cartridge of claim 11 where the magnetic source comprises a movable permanent magnet for separating the captured magnetic beads combined with the analyte from uncaptured magnetic beads not combined with the analyte, for disposing the captured magnetic beads into the detector to allow conjugation of the functionalized captured magnetic beads with the detector, and for removing uncaptured magnetic beads and other noninteracting components of the analyte or buffer from the detector to allow a final measurement to be made.

13. The cartridge of any of the claims 10-12 where the smart device provides software-controlled, user input control and data functions and provides software-controlled user output data functions for the cartridge.

14. A method of operating a medically diagnostic cartridge used with a smart device capable of communicating with a network, the medically diagnostic cartridge for performing a portable, fast, field assay of an analyte in a sample, the method comprising:

mixing the analyte, functionalized magnetic beads, and buffer into a homogenous mixture, wherein at least some of the functionalized magnetic beads capture the analyte to form an analyte-magnetic bead half sandwich; transferring the analyte, buffer and functionalized magnetic beads toward a detector; selectively disposing the captured magnetic beads into the detector to allow conjugation of the analyte-magnetic bead half sandwich with a functionalized portion of the detector to form an immunoassay sandwich; and detecting the presence and/or amount of immunoassay sandwich formed in or on the detector to generate a diagnostic output.

15. The method of claim 14 further comprising one or more of the following:

recirculating the homogenized mixture a predetermined number of times through the cartridge in a predetermined time period and repeating the mixing of the analyte, functionalized magnetic beads, and buffer into a homogenous mixture, wherein at least some of the functionalized magnetic beads capture the analyte to form an analyte-magnetic bead half sandwich, transferring the analyte, buffer and functionalized magnetic beads toward a detector, selectively disposing the captured magnetic beads into the detector to allow conjugation of the analyte-magnetic bead half sandwich with a functionalized portion of the detector to form an immunoassay sandwich, and detecting the presence and/or amount of immunoassay sandwich formed in or on the detector to generate a diagnostic output;
removing uncaptured magnetic beads and other noninteracting components of the analyte or buffer from the mixture detector before detecting the presence and/or amount of immunoassay sandwich formed in or on the detector to generate a diagnostic output;
removing nonspecifically bound mass amplifiers from the homogenous mixture and/or detector to reduce generation of false positive diagnostic output.

*FIG. 1*

EP 3 495 811 A1

FIG. 2

FIG. 3

FIG. 4

FIG. 4
CONTINUED

FIG. 5

FIG. 6

FIG. 7A

FIG. 7B

FIG. 7C

FIG. 7D

FIG. 8

FIG. 9

FIG. 10

**FIG. 11A**

**FIG. 11B**

FIG. 12

FIG. 13A

FIG. 13B

FIG. 13C

FIG. 14A

FIG. 14B

EP 3 495 811 A1

FIG. 14C

FIG. 15A

FIG. 15B

FIG. 15C

FIG. 15D

FIG. 110

EP 3 495 811 A1

FIG. 12o

FIG. 13o

FIG. 140

EP 3 495 811 A1

FIG. 15

EP 3 495 811 A1

FIG. 16

EP 3 495 811 A1

EP 3 495 811 A1

FIG. 17

60

FIG. 180

FIG. 19o

FIG. 10

SKC SH-SAW SENSOR

209o  227o  2350  237o  2110  1600

EP 3 495 811 A1

FIG. 11

210

FIG. 12

220

EP 3 495 811 A1

FIG. 13

FIG. 14

240

FIG. 15

FIG. 16

FIG. 17A

FIG. 17B

270 B

FIG. 17C

Europäisches
Patentamt

European
Patent Office

Office européen
des brevets

# EUROPEAN SEARCH REPORT

Application Number

EP 18 21 1676

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/329142 A1 (BATTRELL C FREDERICK [US] ET AL) 27 December 2012 (2012-12-27)<br>* abstract *<br>* paragraph [0174] - paragraph [0181] *<br>* paragraph [0199] - paragraph [0204] *<br>* figures 1, 3 * | 1-15 | INV.<br>G01N29/02<br>G01N29/22 |
| Y | US 2011/223583 A1 (GORDON NEIL [CA] ET AL) 15 September 2011 (2011-09-15)<br>* paragraph [0004] * | 14,15 | |
| Y | EP 2 284 539 A1 (BIOSCALE INC [US]) 16 February 2011 (2011-02-16)<br>* abstract *<br>* paragraph [0012] *<br>* paragraph [0051] *<br>* paragraph [0114] *<br>* paragraph [0127] - paragraph [0129] *<br>* figures 1A, 1B, 3 * | 1-15 | |
| Y | US 2006/205061 A1 (ROUKES MICHAEL L [US]) 14 September 2006 (2006-09-14)<br>* paragraph [0096] * | 1-13,15 | TECHNICAL FIELDS SEARCHED (IPC)<br><br>G01N |
| Y | US 8 436 509 B1 (BRANCH DARREN W [US]) 7 May 2013 (2013-05-07)<br>* abstract * | 1-9, 11-13 | |

The present search report has been drawn up for all claims

| Place of search | Date of completion of the search | Examiner |
|---|---|---|
| Munich | 23 January 2019 | Rouault, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 1676

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2019

| Patent document cited in search report | | Publication date | Patent family member(s) | | Publication date |
|---|---|---|---|---|---|
| US 2012329142 | A1 | 27-12-2012 | AU 2007225038 A1<br>EP 2007905 A2<br>ES 2393758 T3<br>HK 1126824 A1<br>JP 5254949 B2<br>JP 2009529883 A<br>US 2009148847 A1<br>US 2009148933 A1<br>US 2012329142 A1<br>WO 2007106579 A2<br>WO 2007106580 A2 | | 20-09-2007<br>31-12-2008<br>27-12-2012<br>24-05-2013<br>07-08-2013<br>27-08-2009<br>11-06-2009<br>11-06-2009<br>27-12-2012<br>20-09-2007<br>20-09-2007 |
| US 2011223583 | A1 | 15-09-2011 | US 2011223583 A1<br>WO 2010057318 A1 | | 15-09-2011<br>27-05-2010 |
| EP 2284539 | A1 | 16-02-2011 | NONE | | |
| US 2006205061 | A1 | 14-09-2006 | NONE | | |
| US 8436509 | B1 | 07-05-2013 | US 8436509 B1<br>US 8669688 B1 | | 07-05-2013<br>11-03-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1748055 W
- US 62597202 A

- US 597090 A

**Non-patent literature cited in the description**

- **BACA.** Rapid Detection of Ebola Virus with a Reagent-Free, Point-of-Care Biosensor. *Sensors,* 2015, vol. 15, 8605-8614